# EUROPEAN PATENT APPLICATION

(11) **EP 4 679 870 A1**
(43) Date of publication of application: **14.01.2026**
(21) Application number: 23925667.0
(22) Date of filing: 03.03.2023
(51) Int. Cl.: H04W 8/18, H04W 8/24

(54) **TIMER CONTROL METHOD AND COMMUNICATION DEVICE**

(71) Applicant: Guangdong OPPO Mobile Telecommunications Corp., Ltd., Wusha, Chang'an, Dongguan 523860 (CN)
(72) Inventor: WU, Hao, Dongguan, Guangdong 523860 (CN); YOU, Xin, Dongguan, Guangdong 523860 (CN); LIN, Xue, Dongguan, Guangdong 523860 (CN)
(74) Representative: RGTH
(86) International application number: PCT/CN2023/079665
(87) International publication number: WO 2024/182941

(57) **Abstract**

The present application relates to a timer control method and a communication device. The method comprises: a first communication device determines control information of a timer on the basis of duration related information of the timer and state information of the first communication device. According to the embodiments of the present application, the first communication device can determine the control information of the timer on the basis of the duration related information of the timer and the state information of the first communication device, so that the timer can be adaptively adjusted, and the performance of the communication device is improved.

## Description

### TECHNICAL FIELD

The present application relates to the field of communications, and in particular, to timer control methods and communication devices.

### BACKGROUND

Communication networks, such as radio access networks, utilize a large number of timers. These timers have functions such as reducing power consumption, preventing contention conflicts, and reducing access latency. A duration of a timer is usually configured by a network side and transmitted to a user equipment via proprietary signaling.

### SUMMARY

Embodiments of the present application provide timer control methods and communication devices, which may adaptively adjust timer(s).

Embodiments of the present application provide a timer control method, which includes: determining, by a first communication device, control information of timer(s) based on duration-related information of the timer(s) and state information of the first communication device.

Embodiments of the present application provide a timer control method, which includes: transmitting, by a second communication device, duration-related information of timer(s), where the duration-related information of the timer(s) is used for indicating to a first communication device to determine control information of the timer(s) based on the duration-related information of the timer(s) and state information of the first communication device.

Embodiments of the present application provide a first communication device, which includes: a processing unit configured to determine control information of timer(s) based on duration-related information of the timer(s) and state information of the first communication device.

Embodiments of the present application provide a second communication device, which includes: a first transmitting unit configured to transmit duration-related information of timer(s), where the duration-related information of the timer(s) is used for indicating to a first communication device to determine control information of the timer(s) based on the duration-related information of the timer(s) and state information of the first communication device.

Embodiments of the present application provide a communication device, which includes a processor and a memory. The memory is configured to store a computer program, and the processor is configured to call the computer program stored in the memory and run the computer program to cause the communication device to perform the above timer control method.

Embodiments of the present application provide a chip to perform the above timer control method. Specifically, the chip includes a processor configured to call a computer program from a memory and run the computer program to cause a device equipped with the chip to perform the above timer control method.

Embodiments of the present application provide a computer-readable storage medium configured to store a computer program, when executed by a device, causes the device to perform the above timer control method.

Embodiments of the present application provide a computer program product including computer program instructions, where the computer program instructions cause a computer to perform the above timer control method.

Embodiments of the present application provide a computer program, and the computer program, when executed on a computer, causes the computer to perform the above timer control method.

In the embodiments of the present application, the first communication device may determine the control information of the timer(s) based on the duration-related information of the timer(s) and the state information of the first communication device, so that the timer(s) may be adaptively adjusted to improve performance of the communication device.

### BRIEF DESCRIPTION OF THE DRAWINGS

FIG. 1 is a schematic diagram of an application scenario according to embodiments of the present application.
FIG. 2 is a schematic flowchart of a timer control method according to an embodiment of the present application.
FIG. 3 is a schematic flowchart of a timer control method according to another embodiment of the present application.
FIG. 4 is a schematic flowchart of a timer control method according to another embodiment of the present application.
FIG. 5 is a schematic flowchart of a timer control method according to another embodiment of the present application.
FIG. 6 is a schematic flowchart of a timer control method according to yet another embodiment of the present application.
FIG. 7 is a schematic flowchart of a timer control method according to yet another embodiment of the present application.
FIG. 8 is a schematic flowchart of a timer control method according to an embodiment of the present application.
FIG. 9 is a schematic flowchart of a timer control method according to another embodiment of the present application.
FIG. 10 is a schematic flowchart of a timer control method according to another embodiment of the present application.
FIG. 11a and FIG. 11b are schematic diagrams of an adjustment operation of a UE based on a value range of a duration of a timer.
FIG. 12a and FIG. 12b are schematic diagrams of an adjustment operation of a UE based on a duration of a timer configured by a network.
FIG. 13 is a schematic block diagram of a first communication device according to an embodiment of the present application.
FIG. 14 is a schematic block diagram of a first communication device according to another embodiment of the present application.
FIG. 15 is a schematic block diagram of a second communication device according to an embodiment of the present application.
FIG. 16 is a schematic block diagram of a second communication device according to another embodiment of the present application.
FIG. 17 is a schematic block diagram of a communication device according to an embodiment of the present application.
FIG. 18 is a schematic block diagram of a chip according to an embodiment of the present application.
FIG. 19 is a schematic block diagram of a communication system according to an embodiment of the present application.

### DETAILED DESCRIPTION

Technical solutions in the embodiments of the present application will be described below in conjunction with drawings of the embodiments of the present application.

The technical solutions of the embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), wireless fidelity (WiFi), a 5th-generation (5G) communication system, or other communication systems.

Generally speaking, conventional communication systems support a limited number of connections and are relatively easy to implement. However, with the development of communication technologies, mobile communication systems support not only the conventional communication but also device to device (D2D) communication, machine to machine (M2M) communication, machine type communication (MTC), vehicle to vehicle (V2V) communication, sidelink (SL) communication, and vehicle to everything (V2X) communication, among others. The embodiments of the present application may also be applied to such communication systems.

In an implementation, a communication system according to embodiments of the present application may be applied to a carrier aggregation (CA) scenario, a dual connectivity (DC) scenario, or a standalone (SA) network deployment scenario.

In an implementation, the communication system according to embodiments of the present application may be applied to an unlicensed spectrum, where the unlicensed spectrum may also be considered as a shared spectrum; or the communication system in the embodiments of the present application may be applied to a licensed spectrum, where the licensed spectrum may also be considered as an unshared spectrum.

In the embodiments of the present application, various embodiments are described with respect to a network device and terminal devices. The terminal device may also be referred to as a user equipment (UE), an access terminal, a user unit, a user station, a mobile station, a mobile console, a remote station, a remote terminal, a mobile device, a user terminal, a terminal, a wireless communication device, a user agent, a user apparatus, or the like.

The terminal device may be a station (STA) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, an in-vehicle device, a wearable device, a terminal device in a next-generation communication system (such as an NR network), a terminal device in a future evolved public land mobile network (PLMN), or the like.

In embodiments of the present application, the terminal device may be deployed on land, including indoor or outdoor environments, in forms such as handheld, wearable, or in-vehicle; or the terminal device may be deployed on water (e.g., a steamship); or the terminal device may be deployed in the air (e.g., an airplane, a balloon, or a satellite).

In embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

By way of example and not limitation, in embodiments of the present application, the terminal device may also be a wearable device. The wearable device, which is also referred to as a wearable smart device, is a generic term for devices capable of being worn, into which the daily wear is intelligently designed and developed by applying wearable technologies, such as glasses, gloves, watches, clothing, and shoes. The wearable device is a portable device that is worn directly on the body, or integrated into the user's clothing or accessories. The wearable device is not only a hardware device, but also achieves powerful functions through software supporting, data interaction, and cloud interaction. A generalized wearable smart device includes, for example, a smartwatch or smart glasses, with full functions, large size, and entire or partial functions without relying on a smartphone, as well as, for example, a smart bracelet or smart jewelry for monitoring physical signs, which only focuses on a certain type of application function and needs to be used in conjunction with other devices (such as a smartphone).

In embodiments of the present application, the network device may be a device used for communicating with a mobile device. The network device may be an access point (AP) in the WLAN, a base station (Base Transceiver Station, BTS) in the GSM or CDMA, a base station (NodeB, NB) in the WCDMA, an evolutional base station (Evolutional Node B, eNB or eNodeB) in the LTE, a relay station or an access point, an in-vehicle device, a wearable device, a network device (gNB) in an NR network, a network device in the future evolved PLMN, a network device in the NTN, or the like.

By way of example and not limitation, in embodiments of the present application, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may be a base station provided on land, water, or other places.

In embodiments of the present application, the network device may provide a service for a cell, and the terminal device communicates with the network device through transmission resources (e.g., frequency domain resources, or frequency spectrum resources) used by the cell. The cell may be a cell corresponding to the network device (e.g., a base station), or belong to a macro base station or a base station corresponding to a small cell. Small cells here may include a metro cell, a micro cell, a pico cell, a femto cell, etc. These small cells have characteristics of small coverage and low transmit power, and are suitable for providing a data transmission service with high speed.

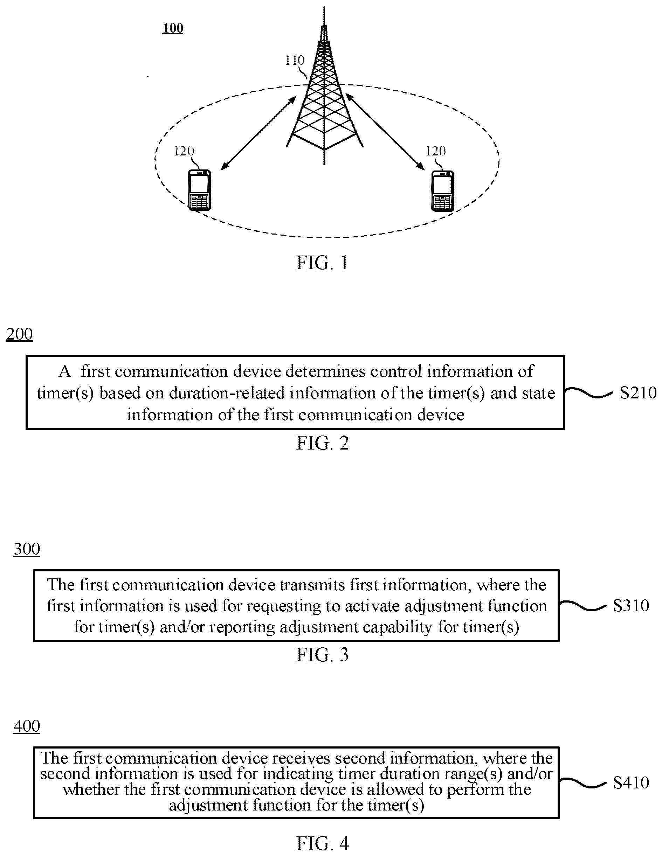

FIG. 1 exemplarily shows a communication system 100. The communication system includes a network device 110 and two terminal devices 120. In an implementation, the communication system 100 may include a plurality of network devices 110, and each network device 110 may have a coverage range containing other numbers of terminal devices 120; this is not limited in the embodiments of the present application.

In an implementation, the communication system 100 may further include other network entities, such as a mobility management entity (MME), an access and mobility management function (AMF), which is not limited in the embodiments of the present application.

The network device may include an access network device and a core network device. That is, the wireless communication system further includes multiple core networks for communicating with the access network device. The access network device may be an evolutional node B (which may be abbreviated as eNB or e-NodeB), a macro base station, a micro base station (also called a "small base station"), a pico base station, an access point (AP), a transmission point (TP) or a new generation Node B (gNodeB), etc., in a long-term evolution (LTE) system, a next-generation mobile communication (next radio, NR) system or an authorized auxiliary access long-term evolution (LAA-LTE) system.

It should be understood that, in embodiments of the present application, a device with a communication function in the network/system may be referred to as a communication device. Taking the communication system illustrated in FIG. 1 as an example, communication devices may include the network device and the terminal device that have the communication function, and the network device and the terminal device may be specific devices in embodiments of the present application, which will not be repeated here. The communication device may further include other devices in the communication system, such as a network controller, a mobility management entity, and other network entities; this is not limited in the embodiments of the present application. The embodiments of the present application may also be used in a sidelink communication system, and sidelink communication may be performed between different terminal devices.

It should be understood that the terms "system" and "network" are often used interchangeably herein. The term "and/or" herein is only an association relationship to describe associated objects, which means that there may be three kinds of relationships. For example, A and/or B may represent that: A exists alone, both A and B exist, and B exists alone. In addition, a character "/" herein generally means that related objects before and after this character are in an "or" relationship.

It should be understood that "indicate" mentioned in the embodiments of the present application may mean a direct indication or an indirect indication, or represent that there is an association relationship. For example, A indicates B, which may mean that A directly indicates B (for example, B may be obtained through A), or may mean that A indirectly indicates B (for example, A indicates C, and B may be obtained through C), or may mean that there is an association relationship between A and B.

In the description of the embodiments of the present application, the term "correspond" may mean that there is a direct correspondence or indirect correspondence between the two, or it may mean that there is an associated relationship between the two, or it may mean a relationship of indicating and being indicated, a relationship of configuring and being configured, etc.

To facilitate the understanding of the technical solutions in the embodiments of the present application, relevant technologies of the embodiments of the present application will be described below. The following related technologies, as optional solutions, may be arbitrarily combined with the technical solutions of the embodiments of the present application, and those combined solutions all fall within the protection scope of the embodiments of the present application.

Several timers in wireless communication networks will be described below.

### 1. T300 timer

This timer is an initial access timer. Increasing its value may improve the success rate of random access during a radio resource control (RRC) connection establishment for a UE. However, in a case where the channel quality of a cell selected by the UE is poor or the cell is heavily loaded, the number of unnecessary random access attempts by the UE may increase. Reducing the value may reduce the number of unnecessary random access attempts by the UE, in a case where the channel quality of a cell selected by the UE is poor or the cell is heavily loaded. However, the success rate of random access during the RRC connection establishment for the UE may be reduced. Repeated attempts by a certain UE to access and transmit connection establishment requests may cause significant interference to other users. A value range of the T300 timer is set to, for example, ms100, ms200, ms300, ms400, ms600, ms1000, ms1500, and ms2000. In the embodiments of the present application, ms100 represents 100 milliseconds, and the others are similar.

### 2. T302 timer

This timer is an access control-related timer during initial access procedure. Setting the timer too large may cause an excessively long restriction period after UE RRC connection rejection, preventing timely re-establishment of RRC connections that could otherwise have been established, thereby impacting user perception. Setting the timer too small may intensify competition within the system, causing network congestion. A value range of the T302 timer is set to, for example, INTEGER (1...16), where INTEGER represents an integer.

### 3. T304 timer

In a case of "intra-evolute universal mobile telecommunications system terrestrial radio access network (E-UTRAN)/NR handover" and "inter-system handover to E-UTRAN/NR", the UE starts the timer upon receiving the RRC connection reconfiguration message with "mobilityControlInfo", and stops the timer after completing random access to a new cell. Upon expiration of the timer, the UE needs to revert to a source cell configuration and initiate an RRC re-establishment request. Setting the timer value too large may cause failure in both timely reversion and initiation of the RRC connection reestablishment upon handover failure; setting the timer value too small may cause the UE to miss the random access opportunities that could otherwise be successful. A value range of the T304 timer is set to, for example, ms50, ms100, ms150, ms200, ms500, ms1000, ms2000, and spare1, where spare1 may represent a reserved value.

The current wireless communication system provides greater flexibility than ever before, featuring wide applicability to different scenarios and full utilization of limited resources. However, currently, basic principles of most work are still based on theoretical modeling of actual communication environments or simple parameter selection. The benefits that this basic working mode may bring are gradually weakening in changing scenarios and complex communication environments. In view of this situation, it is currently necessary to adopt new methods and ideas and combine them with traditional wireless communication theories and systems to further improve the performance of wireless communication systems.

Supervised learning is a machine learning method that may learn or create a model (a function/learning model) from training data and infer new instances based on this model. The training data consists of input objects (typically vectors) and expected outputs. The output of the function may be a continuous value (called regression analysis) or a predicted classification label (called classification). The task of a supervised learner is to predict the output of the function for any possible input after observing some pre-labeled training examples (inputs and expected outputs). To achieve this, learners must generalize from existing data to unobserved situations in a "rational" manner (i.e., inductive bias).

Reinforcement learning is a field in machine learning that emphasizes how to act based on the environment to maximize expected reward. Reinforcement learning is the third basic machine learning method besides supervised learning and unsupervised learning. Unlike supervised learning, reinforcement learning does not require labeled input-output pairs nor precise corrections for non-optimal solutions. Its focus lies in finding a balance between exploration (of unknown areas) and exploitation (of existing knowledge). The "exploration-exploitation" trade-off in reinforcement learning is most extensively studied in multi-armed bandit problems and finite Markov decision processes (MDPs). In machine learning problems, the environment is typically abstracted as an MDP, because many reinforcement learning algorithms may only use dynamic programming methods under this assumption. The main difference between traditional dynamic programming methods and reinforcement learning algorithms is that the latter does not require knowledge about the MDP and targets large-scale MDPs for which no exact method may be found.

Radio access networks utilize a large number of timers to reduce power consumption, prevent contention conflicts, and reduce access latency. Generally speaking, the durations of these timers are configured by the network side and transmitted to the UE via dedicated signaling. In 3GPP, a corresponding value range is set for the duration of each timer, and the value range is in the form of a discrete set. The network may select a specific value from the corresponding set as the timer duration. The configuration of the timer duration is based on a default value or on the status of the network side, and the specific algorithm mechanism may be determined independently by operators or equipment manufacturers.

The aforementioned timer duration configuration process does not take into account the behavioral characteristics of the UE (e.g., location, service). In rapidly changing wireless network environments, the timer duration configured by the network may be difficult to meet requirements of the UE side, and unreasonable timer duration configuration will impact the performance of the UE. For example, if the duration of the T304 timer during the mobility switching is configured too long, the UE may be unable to reestablish the connection for a long time, thereby increasing the UE service interruption time. If it is configured too short, the UE may miss the random access opportunity, triggering frequent reestablishment processes, which also increases the UE service interruption time. Therefore, it is particularly important to configure an appropriate timer duration based on the UE's behavioral characteristics.

The timer control method according to embodiments of the present application may be an artificial intelligence (AI)-based radio access network timer adjustment method. The UE may adaptively adjust timer duration(s) by combining the information collected by itself with the duration-related information of the timer(s) provided by the network side, such as timer duration configuration information, thereby enhancing the performance of the UE.

FIG. 2 is a schematic flowchart of a timer control method 200 according to an embodiment of the present application. The method may optionally be applied to the system illustrated in FIG. 1, but is not limited thereto. The method includes at least part of the following content.

In S210, a first communication device determines control information of timer(s) based on duration-related information of the timer(s) and state information of the first communication device.

In embodiments of the present application, the communication system may include various timers. For example, the timer(s) that may be used by the first communication device may include, but are not limited to, at least one of: an access-type timer, a drop-type timer and constant, a handover-type timer, a reestablishment-type timer, a connection recovery-type timer, a discontinuous reception (DRX)-related timer, a bandwidth part (BWP) switching timer, a timing advance (TA) timer, a serving cell configuration timer, or the like.

In embodiments of the present application, the first communication device may be a terminal device, such as a first terminal device. The first communication device may receive control information of one or more timers from other communication devices, such as a network device or other terminal devices, or may determine control information of one or more timers according to state information of the first communication device. In embodiments of the present application, other communication devices different from the first communication device may be referred to as second communication devices. Similarly, other terminal devices different from the first terminal device may be referred to as second terminal devices.

In embodiments of the present application, duration-related information of the timer(s) may be one or more pieces of duration-related information of the timer(s) that are configured or pre-configured. For example, the duration-related information of the timer(s) may be timer duration configuration information received by the first communication device from the second communication device. The timer duration configuration information may include timer duration range(s) (which may also be referred to as timer range(s), etc.), or may include specific timer duration(s).

In embodiments of the present application, the first communication device may determine the control information of the timer(s) based on its own state information and configured or pre-configured duration-related information of the timer(s). The first communication device may control an operation of a timer based on control information of the timer. For example, a timer is controlled to start or stop. For another example, a timer is controlled to start and stop after a period of time.

In embodiments of the present application, the first communication device may adaptively determine the control information of the timer(s) based on its own state information. The control information of the timer(s) of the terminal device may adapt to changes in the communication environment, enabling the timer-related operations more reasonable, and improving performance of the first communication device. For example, a terminal device may change the rigid configuration of the conventional network timer duration so that the duration(s) of the terminal device timer(s) may adapt to the rapid changes in the wireless environment, thereby promoting the operation related to the terminal device timer(s) and improving performance of the terminal device and the network.

FIG. 3 is a schematic flowchart of a timer control method 300 according to another embodiment of the present application. The method may include one or more features of the timer control method described above. In an implementation, the method further includes the following content.

In S310, the first communication device transmits first information, where the first information is used for requesting to activate adjustment function for timer(s) and/or reporting adjustment capability for timer(s).

In an implementation, the first information is included in at least one of: a radio resource control (RRC) message, a media access control (MAC) control element (CE), uplink control information (UCI), a UE assistance information (*UEAssistanceInformation*) message and a UE capability information *(UE capability information)* message.

In embodiments of the present application, if the first communication device needs to adjust timer(s), the first communication device may transmit first information to the second communication device. The first information may be used for requesting to activate adjustment function for one or more timers from the second communication device, or reporting adjustment capability for one or more timers to the second communication device, or both requesting to activate the adjustment function for one or more timers from the second communication device and reporting the adjustment capability for one or more timers. The adjustment capability for the timer(s) reported by the first communication device to the second device may include whether the first communication device may adjust, based on its own state information, corresponding timer duration(s). For example, the first communication device reports that it has the capability to adjust durations of a T300 timer and a T304 timer. After receiving the first information, the second communication device may return, in response to the first information, second information related to the timers indicated by the first information to the first communication device. The first communication device may, via the first information, request to activate adjustment function for timer(s) and/or report adjustment capability for timer(s) to the second communication device that has received the first information, and inform the second communication device of timer adjustment requirements, thereby potentially receiving information from the second communication device for assisting in adjusting or controlling the timers, thereby improving the accuracy of adjustment or control results of the timers.

FIG. 4 is a schematic flowchart of a timer control method 400 according to another embodiment of the present application. The method may include one or more features of the timer control method described above. In an implementation, the method further includes the following content.

In S410, the first communication device receives second information, where the second information is used for indicating timer duration range(s) and/or whether the first communication device is allowed to perform the adjustment function for the timer(s).

For example, the second information may only be used for indicating the timer duration range(s). After receiving the second information, the first communication device may determine that it is allowed to perform the adjustment function for the timer(s) and obtain the timer duration range(s). Then the first communication device may control or adjust the timer(s) within the timer duration range(s).

For another example, the second information may only be used for indicating whether the first communication device is allowed to perform the adjustment function for the timer(s). After receiving the second information, the first communication device may not be able to determine the timer duration range(s), or may need to obtain the timer duration range(s) in other ways. If the first communication device cannot determine the timer duration range(s), the first communication device does not control or adjust a timer based on the timer duration range(s), but controls or adjusts the timer based on other parameters. Other parameters may be, for example, a working duration that the network or other terminals have configured for the timer, a working duration that the timer has previously used, etc.

For another example, the second information may simultaneously indicate the timer duration range(s) and that the first communication device is allowed to perform the adjustment function for the timer(s). In this case, after receiving the second information, the first communication device may determine that it is allowed to perform the adjustment function for the timer(s) and may obtain the timer duration range(s), and may control or adjust the timer(s) based on the timer duration range(s).

For another example, the second information may only indicate that the first communication device is not allowed to perform the adjustment function for the timer(s), but does not indicate the timer duration range(s). Since the second information indicates that the first communication device is not allowed to perform the adjustment function for the timer(s), the first communication device may not perform subsequent operations after receiving the second information, so the second information does not need to indicate the timer duration range(s). Alternatively, if the second information indicates that the first communication device is not allowed to perform the adjustment function for the timer(s), and the second information also indicates the timer duration range(s), although the timer duration range(s) are not used in this case, the timer duration range(s) may be used in a case where an indication indicating that the first communication device is allowed to perform the adjustment function for the timer(s) is received subsequently.

In the embodiments of the present application, "indicate" may mean a direct indication or an explicit indication, or an indirect indication or an implicit indication. For example, the second information may carry specific value(s) within the timer duration range(s), which is a direct indication or an explicit indication. For another example, the second information may carry an identifier that corresponds to the timer duration range(s). Based on the identifier, the specific values corresponding to the timer duration range(s) may be found, which is an indirect indication or an implicit indication.

In embodiments of the present application, the second information may be response information to the first information, or may be information transmitted separately by the second communication device and not directly related to the first information. The second information may assist the first communication device in adjusting or controlling the timer(s), thereby improving the accuracy of adjustment or control results of the timer(s).

In embodiments of the present application, a timer duration range indicated by the second information may include an optional duration set of a timer. For example, the optional duration set {100 ms (milliseconds), 200 ms, 300 ms, 400 ms} may indicate that the optional duration of the timer is 100 ms, 200 ms, 300 ms, or 400 ms. In the second information, 100 ms may be indicated by ms100, and other durations may also be indicated in a similar manner. A timer duration range indicated by the second information may also include a minimum value and a maximum value of a specific duration. For example, [100 ms, 400 ms] may indicate that the duration of the timer may be selected anywhere in a range of 100 ms to 400 ms.

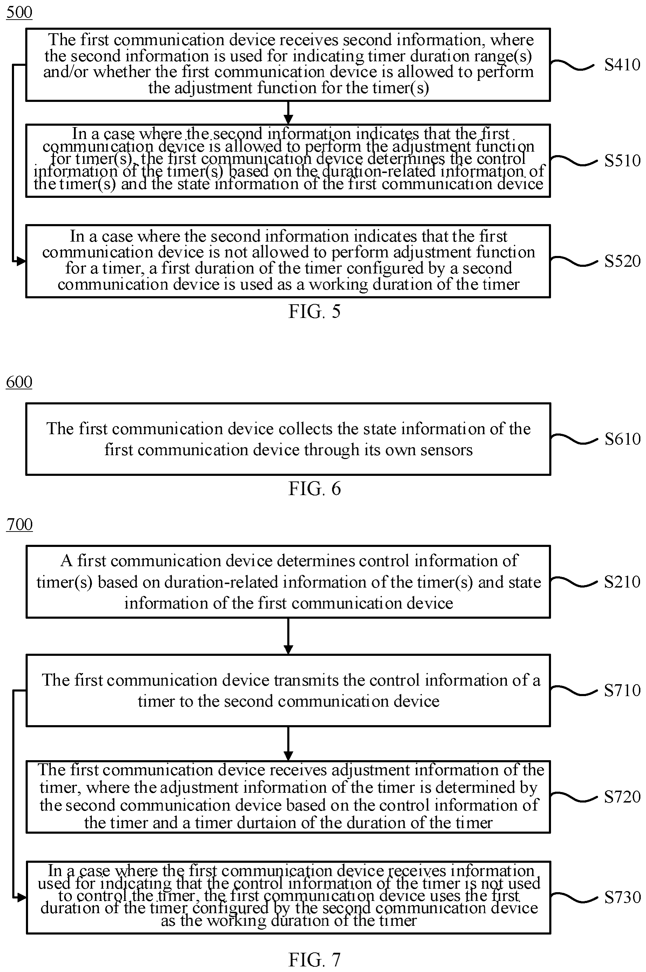

FIG. 5 is a schematic flowchart of a timer control method 500 according to another embodiment of the present application. The method may include one or more features of the timer control method described above. In an implementation, S210, where the first communication device determines the control information of the timer(s) based on the duration-related information of the timer(s) and the state information of the first communication device, includes S510, where the first communication device determines the control information of the timer(s) based on the duration-related information of the timer(s) and the state information of the first communication device in a case where the second information indicates that the first communication device is allowed to perform the adjustment function for the timer(s).

In an implementation, the method 500 further includes S520 of using a first duration of a timer configured by the second communication device as a working duration of the timer in a case where the second information indicates that the first communication device is not allowed to perform adjustment function for the timer.

In embodiments of the present application, the first communication device may receive second information from the second communication device, refer to S410. The first communication device may obtain the second information in other ways, such as from local storage. For example, if the second information received by the first communication device indicates that the first communication device is not allowed to perform adjustment function for timer(s), the first communication device may terminate the adjustment function for the timer(s) and use the first duration(s) of the timer(s) configured by the second communication device as the working duration(s) of the timer(s). Taking a first duration as a working duration of a timer may also be understood as controlling the timer based on the first duration. For example, a timer is controlled to remain in an active state for the first duration.

If the second information received by the first communication device indicates that the first communication device is allowed to perform the adjustment function for the timer(s), the first communication device may perform S210 or S510 to obtain the control information of the timer(s). Otherwise, S210 or S510 may not be performed, but S520 may be performed. In this case, if the first communication device has previously activated the adjustment function for timer(s), the first communication device may terminate the adjustment function for the timer(s). Furthermore, if the first communication device has received the first duration(s) of the timer(s) configured by the second communication device, the first communication device may use the first duration(s) as the working duration(s) of the timer(s). The second information may flexibly indicate whether the first communication device is allowed to perform adjustment function for timer(s), and thus this method adapts to diverse communication scenarios.

In an implementation, a first duration is a default duration of a timer configured by the second communication device. For example, the first communication device may receive timer duration configuration information from the second communication device, where the timer duration configuration information may include default durations configured by the second communication device for one or more timers of the first communication device.

FIG. 6 is a schematic flowchart of a timer control method 600 according to another embodiment of the present application. The method may include one or more features of the timer control method described above. In an implementation, the state information of the first communication device includes at least one of global positioning system (GPS) location information, speed information or an information timestamp of the first communication device.

In an implementation, the method 600 further includes S610, where the first communication device collects the state information of the first communication device through its own sensors. For example, various sensors, such as a gyroscope, a GPS module, an accelerometer, may be provided in the first communication device. The state information of the first communication device may be collected by these sensors, thereby assisting the first communication device in adjusting or controlling the timer.

In embodiments of the present application, after receiving the first information, the second communication device may determine whether the first communication device is allowed to perform adjustment function for timer(s) based on the first information. If it is, the second information may be utilized to indicate that the first communication device is allowed to perform the adjustment function for the timer(s). Otherwise, the second information may be utilized to indicate that the first communication device is not allowed to perform the adjustment function for the timer(s). If the first information includes both activation request and/or adjustment capability for multiple timers, the second communication device may indicate, via the second information, whether the first communication device is allowed to perform adjustment function for multiple timers. For example, the first communication device may be allowed to perform adjustment function for a part of the timers, but not allowed to perform adjustment function for another part of the timers.

In an implementation, duration-related information of a timer includes a timer duration range. In some examples, the first communication device may obtain timer duration range(s). In this case, in S210, the first communication device may determine the control information of the timer(s) based on the timer duration range(s) and the state information of the first communication device.

In an implementation, the timer duration range(s) are carried in the timer duration configuration information and/or the second information. For example, the first communication device may obtain the timer duration range(s) based on the timer duration configuration information transmitted by the second communication device, such as a network device or a terminal device. For another example, the first communication device may obtain the timer duration range(s) based on the second information transmitted by the second communication device. For explanations and examples of the second information, reference may be made to relevant descriptions of the above embodiments.

In an implementation, duration-related information of a timer includes a first duration of the timer configured by the second communication device. In some examples, the first communication device does not obtain timer duration range(s), but obtains the first duration(s) of the timer(s) configured by the second communication device. In this case, in S210, the first communication device may determine the control information of the timer(s) based on the first duration(s) of the timer(s) and the state information of the first communication device.

In an implementation, control information of a timer includes a second duration of the timer. In some examples, if the first communication device may obtain timer duration range(s), the first communication device may determine second duration(s) of timer(s) based on the timer duration range(s) and state information of the first communication device. In some examples, if the first communication device does not obtain timer duration range(s), the first communication device may determine second duration(s) of timer(s) based on first duration(s) of the timer(s) and state information of the first communication device.

In an implementation, a second duration is a working duration of a timer determined by the first communication device based on duration-related information of the timer and the state information of the first communication device. In embodiments of the present application, after the first communication device determines a second duration of a timer based on duration-related information of the timer and the state information of the first communication device, the first communication device may use the second duration as the working duration of the timer. For example, in a case where it is necessary to control the timer to start, the timer may be controlled to remain in the active state for the second duration.

In an implementation, duration-related information of a timer includes a first duration of a timer configured by the second communication device, and a second duration is obtained by performing a fixed increment or proportional scaling adjustment based on the state information of the first communication device and the first duration of the timer configured by the second communication device.

In embodiments of the present application, if the first communication device obtains a first duration of a timer, a second duration may be obtained based on a fixed increment or proportional scaling adjustment of the first duration. For example, the second duration is equal to the first duration plus N or the first duration plus negative N (-N), where N or -N is a fixed increment. For another example, the second duration is equal to the first duration multiplied by M, where M is a scaling ratio.

In embodiments of the present application, the first communication device may first determine, based on the state information of the first communication device, whether an increase of the duration or a decrease of the duration is required. Then, the first communication device may perform a fixed increment or proportional scaling adjustment on the first duration to obtain the second duration. For example, if it is determined based on the state information of the first communication device that the increase of the duration is required, the second duration is equal to the first duration plus N. If it is determined based on the state information of the first communication device that the decrease of the duration is required, the second duration is equal to the first duration plus (-N). Taking values as an example, the first duration is 400 ms, and if it is determined based on the state information of the first communication device that the duration of the timer is to be increased, and the fixed increment value is 100 ms, then the second duration is 500 ms. By applying fixed increment or proportional scaling adjustment to the first duration, the required second duration may be quickly obtained, thereby improving adjustment efficiency.

In an implementation, duration-related information of a timer includes a timer duration range, and the second duration is within the timer duration range.

In embodiments of the present application, if the first communication device obtains a timer duration range, the first communication device may determine a value within the timer duration range as the second duration. For example, if the timer duration range is {100 ms, 200 ms, 300 ms, 400 ms}, the second duration may be 200 ms. For another example, if the timer duration range is [100 ms, 400 ms], the second duration may be 150 ms. Setting the second duration within the timer duration range may meet the timer duration requirement, thereby flexibly adapting to various communication scenarios.

In embodiments of the present application, not only a timer duration range is obtained, but also a first duration of a timer is obtained. The second duration may be obtained by adjusting the first duration via a fixed increment or proportional scaling adjustment, and the second duration may fall within the timer duration range.

FIG. 7 is a schematic flowchart of a timer control method 700 according to another embodiment of the present application. The method may include one or more features of the timer control method described above. In an implementation, after S210, the method further includes controlling, by the first communication device, a timer based on a second duration.

In an implementation, a condition for the first communication device to control the timer based on the second duration includes one of:
a difference between the second duration and a first duration being less than a first threshold; or
the second duration being equal to the first duration.

In embodiments of the present application, the first communication device determines, based on a second duration and a first duration, whether the control information of the timer is used to synchronize the duration configuration of the timer. Specifically, after determining a second duration of a timer, the first communication device may compare the difference between the second duration of the timer and the first duration of the timer that is previously configured. Furthermore, the first communication device determines, according to the comparison result, whether the control information of the timer determined by the first communication device is used to synchronize the configuration such as the duration of the timer with the second communication device. The control information of the timer here may include the second duration of the timer, and may further include other information such as whether to start or stop the timer. If the first duration and the second duration of the timer are identical or the difference therebetween is minor, the first communication device may not synchronize the duration configuration of the timer with the second communication device, and the second duration may be used as the working duration of the timer.

For example, in a case where a difference between the second duration and the first duration is less than the first threshold, the first communication device does not transmit the control information of the timer, and starts the timer according to the control information of the timer. In this case, the first communication device may directly use the second duration to control the timer. Since the adjustment range of the timer is limited, the impact on overall system performance may be small.

In an implementation, after S210, the method 700 further includes:
S710, where the first communication device transmits the control information of the timer to the second communication device.

In an implementation, a condition for the first communication device to transmitting the control information of the timer to the second communication device includes one of:
a difference between the second duration and the first duration being greater than or equal to a first threshold; or
the second duration being different from the first duration.

For example, in a case where the difference between the second duration and the first duration is greater than or equal to the first threshold, the first communication device transmits the control information of the timer to the second communication device to synchronize the duration configuration of the timer with the second communication device.

For another example, in a case where the second duration is different from the first duration, the first communication device transmits the control information of the timer to the second communication device to synchronize the duration configuration of the timer with the second communication device.

In embodiments of the present application, if the first duration and the second duration of the timer are different or the difference therebetween is large, the first communication device may synchronize the duration configuration of the timer with the second communication device. For example, the first communication device may transmit the control information of the timer determined by the first communication device to the second communication device. In this case, the first communication device may synchronize the duration configuration of the timer with the second communication device via the control information of the timer. Furthermore, if the second communication device has feedback information regarding the control information of the timer, the second communication device may also assist the first communication device in further improving the accuracy of the control or adjustment of timers.

In an implementation, the first threshold is set based on a service requirement related to the timer. In embodiments of the present application, a specific value of the first threshold used for comparison with the difference between the first duration and the second duration is not specified. The first threshold may be flexibly set according to the service requirement related to the timer in actual application scenarios.

In an implementation, the method 700 further includes:
S720, where the first communication device receives adjustment information of the timer, the adjustment information of the timer being determined by the second communication device based on the control information of the timer and a timer duration range.

In embodiments of the present application, if in S710, the first communication device transmits the control information of the timer to the second communication device to synchronize the duration configuration of the timer, after receiving the control information of the timer, the second communication device may reconfigure the adjustment information of the timer based on the control information of the timer. Then in S720, the second communication device may transmit the adjustment information of the timer to the first communication device. The adjustment information of the timer may further improve the accuracy of the adjustment of the timer and increase the performance gain after the adjustment.

In an implementation, the adjustment information of the timer is used for indicating whether the first communication device is allowed to adjust the working duration of the timer based on the control information of the timer.

In the embodiments of the present application, if the adjustment information of the timer only indicates that the first communication device is allowed to adjust the working duration of the timer based on the control information of the timer, and does not carry a third duration of the timer, the first communication device may use the second duration of the timer as the working duration of the timer. If the adjustment information of the timer indicates that the first communication device is allowed to adjust the working duration of the timer based on the control information of the timer, and carries the third duration of the timer, the first communication device may use the third duration of the timer as the working duration of the timer. If the adjustment information of the timer indicates that the first communication device is not allowed to adjust the working duration of the timer based on the control information of the timer, and carries the third duration of the timer, the first communication device may use the third duration of the timer as the working duration of the timer. If the adjustment information of the timer indicates that the first communication device is not allowed to adjust the working duration of the timer based on the control information of the timer, and does not carry the third duration of the timer, the first communication device may use the first duration of the timer as the working duration of the timer.

In an implementation, adjustment information of a timer is used for indicating a third duration of the timer, and the third duration is determined based on a second duration and a timer duration range. The third duration may be a duration that the second communication device reconfigures for the timer of the first communication device based on the second duration and the timer duration range.

In embodiments of the present application, the third duration of the timer reconfigured by the second communication device based on the second duration may be different from the second duration of the timer received by the second communication device and/or the first duration of the timer previously configured, but cases where the durations are the same are not excluded.

In an implementation, in a case where the second duration of the timer does not fall within the timer duration range, the third duration is obtained by the second communication device processing the second duration of the timer based on a first rule.

In embodiments of the present application, if the first communication device does not obtain a timer duration range, a second duration determined by the first communication device may not fall within the timer duration range. In this case, the second communication device may adjust the value of the second duration based on the timer duration range to obtain a third duration. Based on some rules, the second duration of the timer may be adjusted to a third duration that conforms to the timer duration range, which may meet the duration requirement of the timer, thereby flexibly adapting to various communication scenarios.

In an implementation, the first rule includes one of:
selecting a value closest to the second duration from the timer duration range;
selecting a value greater than and closest to the second duration of the timer from the timer duration range; or
selecting a value less than and closest to the second duration of the timer from the timer duration range.

For example, if the second duration is 220 ms and the timer duration range is {100 ms, 200 ms, 300 ms, 400 ms}, the value of 200 ms that is the closest to the second duration may be selected as the third duration from the timer duration range.

For another example, if the second duration is 90 ms and the timer duration range is {100 ms, 200 ms, 300 ms, 400 ms}, the value of 100 ms that is greater than the second duration of 90 ms and is the closest to the second duration may be selected as the third duration from the timer duration range.

For another example, if the second duration is 350 ms and the timer duration range is {100 ms, 200 ms, 300 ms, 400 ms}, the value of 300 ms that is less than the second duration of 350 ms and is the closest to the second duration may be selected as the third duration from the timer duration range.

The third duration is obtained by selecting the value closest to the second duration from the timer duration range, and this value may be the closest to the state requirement of the first communication device and may also be more consistent with the duration requirement of the timer.

In an implementation, the method 700 further includes:
S730, where in a case where the first communication device receives information used for indicating that control information of a timer is not used to control the timer, the first communication device uses a first duration of the timer configured by the second communication device as a working duration of the timer.

For example, the information used for indicating that the control information of the timer is not used to control the timer may be negative acknowledgement (NACK) information for the control information of the timer.

In embodiments of the present application, the information used for indicating that the control information of the timer is not used to control the timer may be information different from the adjustment information of the timer, The information used for indicating that the control information of the timer is not used to control the timer may also be a category of the adjustment information of the timer, or in the adjustment information of the timer. Therefore, only one of S720 and S730 may be performed. For example, the adjustment information of the timer indicates that the first communication device is not allowed to adjust the working duration of the timer based on the control information of the timer, and does not carry the third duration of the timer. In this case, the adjustment information of the timer may be NACK information for the control information of the timer.

In an implementation, the step of determining the control information of the timer(s) by the first communication device is periodic or based on an event trigger. In this way, the control information of the timer(s) may be updated in time.

In embodiments of the present application, S210 may be performed according to a set period, or may be performed based on certain event triggers. For example, S210 may be performed once every 2 s (seconds). For another example, in a case where an event occurs where the terminal location changes significantly, S210 may be triggered.

In an implementation, control information of a timer is used for indicating whether to perform an operation related to the timer.

In an implementation, the operation related to the timer is starting the timer or stopping the timer.

In embodiments of the present application, control information of a timer may not indicate a specific duration of the timer, but may indicate a variable duration of the timer. For example, control information of a timer may only indicate whether the timer needs to be started or stopped.

In an implementation, in a case where control information of a timer indicates to perform an operation related to the timer, the first communication device continuously performs the operation related to the timer.

In embodiments of the present application, if the first communication device obtains control information indicating the start of a timer, the timer may be started and work continuously. The timer may be stopped after control information indicating to the timer to stop is obtained again or an event triggering the timer to stop occurs.

In an implementation, in a case where control information of a timer indicates not to perform an operation related to the timer, the first communication device does not perform the operation related to the timer continuously.

In embodiments of the present application, if the first communication device obtains control information indicating not to start or stop a timer, the timer may continue not to be started or stopped. The timer may be started after control information indicating the start of the timer is obtained again or an event triggering the start of the timer occurs.

In an implementation, control information of a timer is obtained using model(s); input features of the model(s) include duration-related information of the timer and the state information of the first communication device, and output features of the model(s) include the control information of the timer.

In embodiments of the present application, duration-related information of a timer and state information of the first communication device may be input into model(s) for adjusting the timer to obtain control information of the timer output by the model(s). For example, a timer duration range and the state information of the first communication device are input into the model(s), and a second duration of a timer or the information on whether to start the timer is output by the model(s). For another example, the first duration of the timer and the state information of the first communication device are input into the model(s), and the second duration of the timer or the information on whether to start the timer is output by the model(s). Through prediction of the control information of the timer via model(s) such as an AI model, the accuracy of the control information of the timer may be improved.

In an implementation, the model(s) include at least one of: a supervised learning model, a reinforcement learning model, or a statistical model.

In embodiments of the present application, model(s) used to adjust a timer may include an AI model or a non-AI model. For example, AI models may include supervised learning models and reinforcement learning models, etc. Supervised learning models may include long short-term memory models, etc., and reinforcement learning models may include multi-armed bandit models, etc. Non-AI models may include statistical models, such as an auto regressive integrated moving average (ARIMA) model. Some training samples may be used to train a model in advance to obtain a model for adjusting the timer. For example, a training sample may include a timer duration range, device state information, control information of a timer, and whether there is a performance gain relative to an original network configuration solution. For another example, a training sample may include a first duration of a timer, device state information, control information of the timer, and whether there is a performance gain relative to an original network configuration solution.

In an implementation, the method further includes that the first communication device dynamically optimizes the model(s). In this way, the model parameters may be dynamically updated, and the accuracy of the model calculation results may be continuously improved.

In embodiments of the present application, the model(s) used by the first communication device may be obtained via pre-training. The trained model may be dynamically optimized during its use. For example, a model may obtain corresponding output data for different input data, and the model may be based on the performance difference of the timer adjustment results corresponding to the output data. If the timer adjustment result is good, the model may be dynamically optimized using the input data and output data that correspond to the timer adjustment result. The specific content of the timer adjustment result may be related to the communication process. For example, the timer adjustment result of the random access process may include whether the random access is successful, whether the throughput is improved, whether the service interruption time is shortened, and whether the power consumption of the first communication device is reduced. If the results before and after the timer adjustment are compared and show improved throughput, reduced service interruption time, reduced power consumption of the first communication device, and successful random access, this adjustment may be considered to bring performance gain.

In an implementation, optimization methods of the model(s) include:
determining, by the first communication device, a performance difference between a timer adjustment performance corresponding to the duration of the timer obtained based on the model(s) and a timer adjustment performance corresponding to the first duration of the timer configured by the second communication device; and
optimizing, by the first communication device, the model(s) based on the performance difference;
where the duration of the timer obtained based on the model(s) includes the second duration of the timer determined by the first communication device, and/or the third duration of the timer obtained based on the second duration received by the first communication device from the second communication device.

In an implementation, the performance difference of the timer adjustment results includes at least one of:
if the performance of using the duration of the timer obtained based on the model(s) is better than the performance of using the first duration of the timer, there being a performance gain; or
if the performance of using the duration of the timer obtained based on the model(s) is equal to or weaker than the performance of using the first duration of the timer, there being no performance gain.

In embodiments of the present application, a performance gain may be considered as a positive performance gain. No performance gain may be considered as zero performance gain or negative performance degradation. Zero may indicate that the performance before and after adjustment/control is the same, but the adjustment does not bring any performance change; however, the adjustment increases the amount of network interaction signaling.

For example, the first communication device compares the performance of using the second duration of the timer obtained based on a model with the performance of using the first duration of the timer to obtain a performance difference of the timer adjustment results. If the performance of using the second duration is better than the performance of using the first duration, it indicates that there is a performance gain in using the second duration. The parameters of the model may be adjusted based on the input data, output data, performance gain, etc., corresponding to the second duration obtained by the model. If the performance of using the second duration is weaker than the performance of using the first duration, it indicates that there is no performance gain in using the second duration. For example, if the second duration is used as the working duration of the timer, the random access process is successful; if the first duration is used as the working duration of the timer, the random access process fails, indicating that the second duration has a performance gain.

For another example, after the second duration of the timer is obtained based on a model, the second duration may be transmitted to the second communication device to obtain a third duration. The first communication device compares the performance of using the third duration of the timer with the performance of using the first duration of the timer to obtain a performance difference of the timer adjustment results. If the performance of using the third duration is better than the performance of using the first duration, it indicates that there is a performance gain in using the third duration. The parameters of the model may be adjusted based on the input data, output data, performance gain, etc., corresponding to the second duration obtained from the model. If the performance of using the third duration is weaker than the performance of using the first duration, it indicates that there is no performance gain in using the third duration.

In an implementation, a dataset used for optimizing model(s) includes at least one of:
control information of a timer and performance difference before and after timer adjustment using the control information of the timer;
adjustment information of the timer and performance difference before and after timer adjustment using the adjustment information of the timer; or
parameters of the model(s).

In embodiments of the present application, dataset used for optimizing a model may include training data that enables the first communication device to have a positive performance gain or a negative performance degradation, and may also include parameters of the model after training or optimization. For example, parameters of a long short-term memory model may include model update gradients. The parameters of the multi-armed bandit model and the ARIMA model may include incremental experience pools.

In an implementation, sources of the dataset used for optimizing the model(s) includes the first communication device and/or the second communication device.

In embodiments of the present application, the first communication device may obtain the dataset from itself, or may obtain the dataset from a second communication device, such as a network device or a peer terminal device.

In an implementation, the first communication device is a terminal device, the second communication device is a network device, and the method further includes that the first communication device uploads its own dataset to the network device. The network device may aggregate and/or share the received datasets. In this way, other communication devices that receive the datasets may shorten the data collection process and/or model optimization process, reduce power consumption, and improve efficiency.

In an implementation, the first communication device is a first terminal device, the second communication device is a second terminal device, and the method further includes: transmitting, by the first terminal device, a dataset of the first terminal device to the second terminal device over a sidelink.

The methods according to the embodiments of the present application may be used for uplink and downlink communications, and may also be used for sidelink communications. For example, the terminal devices UE1 and UE2 may upload their own datasets to the network device respectively, and after aggregating the datasets, the network device shares the aggregated datasets with the terminal devices UE1, UE2 and UE3. For another example, the terminal devices UE1 and UE2 may respectively transmit their own datasets to UE3 over the sidelink, and after aggregating the datasets, the UE3 shares the aggregated datasets with the terminal devices UE1, UE2, and UE4. Datasets may be shared more quickly over the sidelink.

In a case, a network device may share a dataset uploaded by a terminal with its neighboring terminals. If the dataset uploaded by the terminal device includes parameters of a trained or optimized model, the network device (or other terminal device) may transmit the parameters of the model to other terminal devices that are closer to the terminal device, such as less than a certain threshold. Terminal devices that receive the parameters of the model may no longer perform a training or optimization process, but may directly update parameters of their models. If the dataset uploaded by the terminal device includes data to be processed for training or optimizing the model, the network device (or other terminal device) may transmit the data to be processed to other terminal devices that are closer to the terminal device, such as less than a certain threshold. Terminal devices that receive the data to be processed may not use the data to be processed to train or optimize their models.

In another case, the network device may aggregate datasets uploaded by multiple terminals that are located relatively close to each other, and then share the datasets with the multiple terminals and their neighboring terminals. The specific example is similar to the network device sharing the dataset of a single terminal, which will not be repeated here.

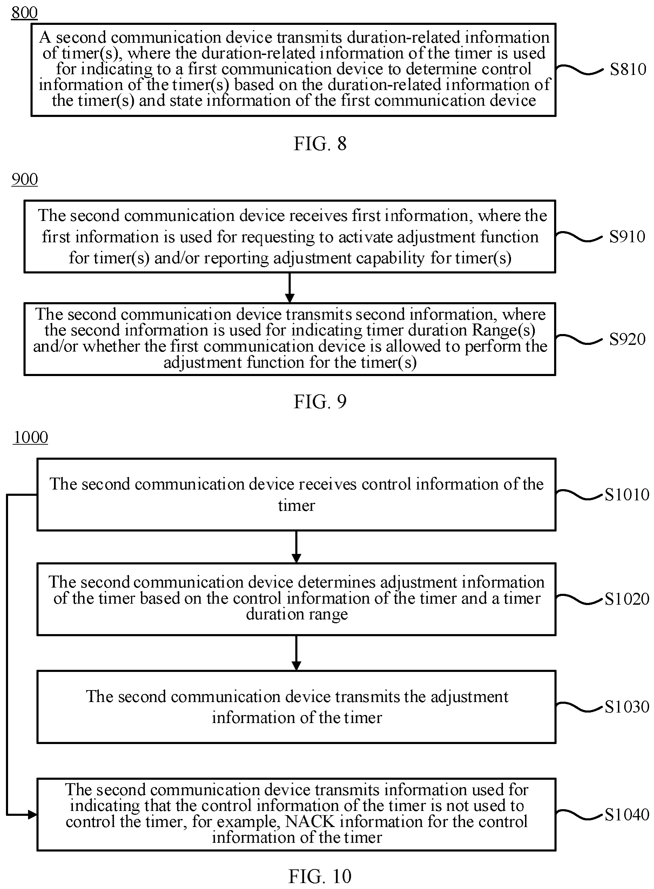

FIG. 8 is a schematic flowchart of a timer control method 800 according to an embodiment of the present application. The method may optionally be applied to the system illustrated in FIG. 1, but is not limited thereto. The method includes at least part of the following content.

In S810, a second communication device transmits duration-related information of timer(s), where the duration-related information of the timer(s) is used for indicating to a first communication device to determine control information of the timer(s) based on the duration-related information of the timer(s) and state information of the first communication device.

FIG. 9 is a schematic flowchart of a timer control method 900 according to another embodiment of the present application. The method may include one or more features of the timer control method described above. In an implementation, the method further includes:
S910, where the second communication device receives first information, where the first information is used for requesting to activate adjustment function for timer(s) and/or reporting adjustment capability for timer(s).

In an implementation, the first information is included in at least one of: an RRC message, a MAC CE, UCI, a UE assistance information message or a UE capability information message.

In an implementation, the method further includes:
S920, where the second communication device transmits second information, where the second information is used for indicating time duration range(s) and/or whether the first communication device is allowed to perform the adjustment function for the timer(s).

In an implementation, the state information of the first communication device includes at least one of GPS location information, speed information or an information timestamp of the first communication device.

In an implementation, the duration-related information of the timer(s) includes the timer duration range(s).

In an implementation, the timer duration range(s) are carried in timer duration configuration information and/or the second information.

In an implementation, the duration-related information of the timer(s) includes first duration(s) of the timer(s) configured by the second communication device.

In an implementation, a first duration is a default duration of a timer configured by the second communication device.

FIG. 10 is a schematic flowchart of a timer control method 1000 according to another embodiment of the present application. The method may include one or more features of the timer control method described above. In an implementation, the method further includes:
S 1010, where the second communication device receives control information of a timer.

In an implementation, the control information of the timer includes a second duration of the timer.

In an implementation, the second duration is a working duration of the timer determined by the first communication device based on the duration-related information of the timer and the state information of the first communication device.

In an implementation, the duration-related information of the timer includes the first duration of the timer configured by the second communication device, and the second duration is obtained by performing a fixed increment or proportional scaling adjustment based on the state information of the first communication device and the first duration of the timer configured by the second communication device.

In an implementation, the duration-related information of the timer includes a timer duration range, where the second duration is within the timer duration range.

In an implementation, S1010 may specifically include that the second communication device receives the control information of the timer from the first communication device.

In an implementation, the method further includes:
S1020, where the second communication device determines adjustment information of the timer based on the control information of the timer and a timer duration range; and
S1030, where the second communication device transmits the adjustment information of the timer. For example, the second communication device transmits the adjustment information of the timer to the first communication device.

In an implementation, the adjustment information of the timer is used for indicating whether the first communication device is allowed to adjust the working duration of the timer based on the control information of the timer.

In an implementation, the adjustment information of the timer is used for indicating a third duration of the timer, and the third duration is determined based on the second duration and the timer duration range. For example, the second communication device reconfigures the third duration of the timer for the first communication device based on the second duration and the timer duration range.

In an implementation, the second communication device determining the adjustment information of the timer based on the control information of the timer and the timer duration range includes that in a case where the second duration of the timer does not fall within the timer duration range, the second communication device processes the second duration of the timer based on a first rule to obtain the third duration.

In an implementation, the first rule includes one of:
selecting a value closest to the second duration from the timer duration range;
selecting a value greater than and closest to the second duration of the timer from the timer duration range; or
selecting a value less than and closest to the second duration of the timer from the timer duration range.

In an implementation, the method further includes S1040, where the second communication device transmits information used for indicating that the control information of the timer is not used to control the timer, for example, NACK information for the control information of the timer. This step may be performed at any time after S1010. For example, the second communication device returns NACK information to the first communication device that transmitted the control information of the timer.

In an implementation, the control information of the timer is used for indicating whether to perform an operation related to the timer.

In an implementation, the operation related to the timer is starting the timer or stopping the timer.

In an implementation, the control information of the timer is obtained by the first communication device using model(s); input features of the model(s) include the duration-related information of the timer and the state information of the first communication device, and output features of the model(s) include the control information of the timer.

In an implementation, the model(s) are at least one of: a supervised learning model, a reinforcement learning model, or a statistical model.

In an implementation, a dataset used for optimizing the model(s) includes at least one of:
the control information of the timer and performance difference before and after timer adjustment using the control information of the timer;
the adjustment information of the timer and performance difference before and after timer adjustment using the adjustment information of the timer; or
parameters of the model(s).

In an implementation, sources of the dataset used for optimizing the model(s) include the first communication device and/or the second communication device.

In an implementation, the first communication device is a terminal device, the second communication device is a network device, and the method further includes that the network device receives at least one dataset uploaded by the terminal device, and the network device aggregates and shares the received datasets.

In an implementation, the first communication device is a first terminal device, the second communication device is a second terminal device, and the method further includes that the second terminal device receives a dataset of the first terminal device transmitted by the first terminal device over a sidelink.

Specific examples of the second communication performing methods 800 to 1000 in the present embodiments may refer to the corresponding descriptions regarding the second communication device, such as a network device or other terminal devices, in the above methods 200 to 700, which will not be repeated here for brevity.

The following are specific application examples of the present application. In the following examples, first information and second information may have similar meanings to those in the above method embodiments. Third information may include the state information of the timer in the above method embodiments. Fourth information may include control information of a timer in the above method embodiments. Fifth information may include adjustment information of the timer in the above method embodiments.

A UE receives timer duration configuration information transmitted by a network side, and the UE performs a first operation related to timer adjustment.

For example, timer(s) include but are not limited to: access-type timers: T300, T302; a drop-type timer and constant: T310; a handover-type timer: T304; reestablishment-type timers: T301, T311; connection recovery-type timers: T319, T319a; DRX-related timers: drx-onDurationTimer, drx-InactivityTimer, drx-ShortCycleTimer; a BWP switching timer: bwp-InactivityTimer; a timing advance (TA) timer: TimeAlignmentTimer; a serving cell configuration timer: sCellDeactivationTimer.

The timer duration configuration information may include only at least one given timer duration value, such as 100 milliseconds; or may include:
at least one given timer duration range, for example, a timer selectable time set {ms100, ms200, ms300, ms400, ms600, ms1000, ms1500, ms2000}.

At least one timer enable indication indicates whether the UE is allowed to adjust the corresponding timer. The indication may be one-bit information. For example, 1 indicates support for the timer adjustment, while 0 indicates no support.

### Specifically

1. The timer duration configuration information may only include corresponding information of one timer. For example, a time alignment timer (TimeAlignmentTimer) information element only includes a TimeAlignmentTimer timer.

### TimeAlignmentTimer information element

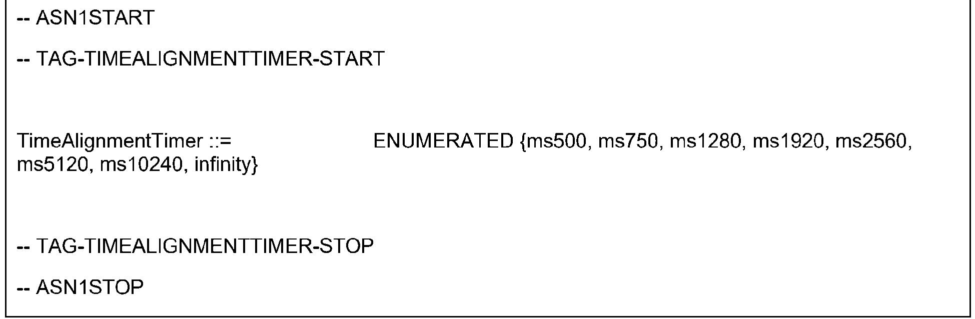

2. The timer duration configuration information may also include corresponding information of multiple timers. For example, UE-TimersAndConstants Information element information includes duration values of T300, T301, T310, T311, and T319 timers at the same time.

### UE-TimersAndConstants information element

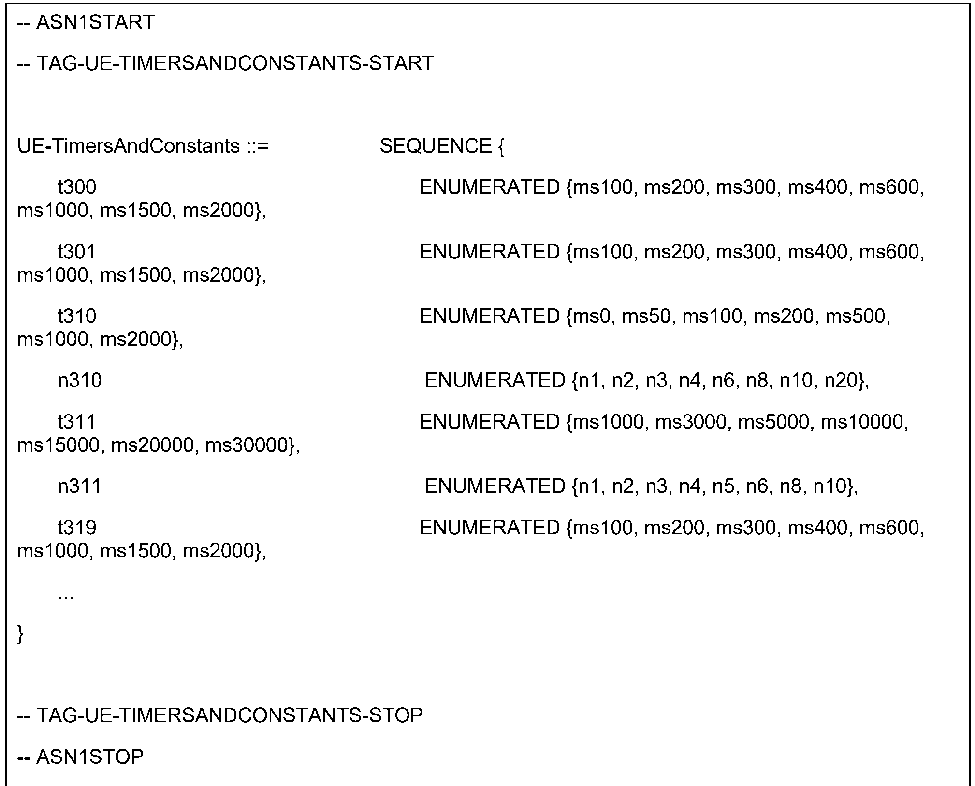

In a case where timer configuration information corresponds to multiple timers, the UE may perform the first operation related to timer adjustment for each timer separately.

Depending on whether the timer duration configuration information includes timer duration range(s), the UE performs the first operation as described in Example 1 and Example 2.

Example 1: the UE can obtain timer duration range(s).

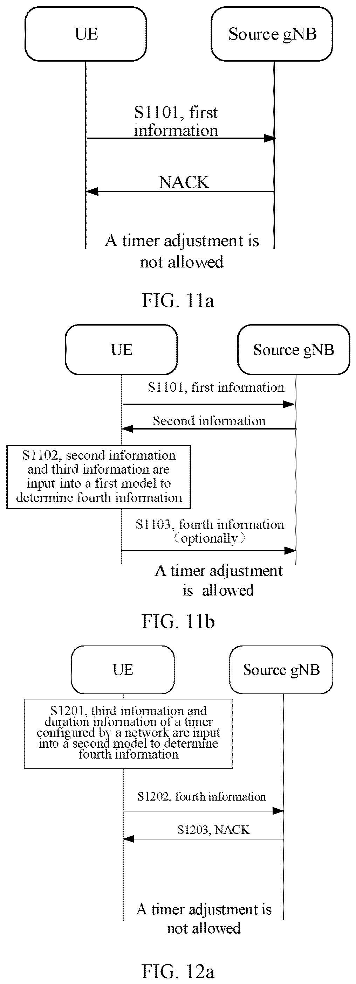

As shown in FIG. 11a and FIG. 11b, operations of a UE based on timer duration range(s) may include the following steps.

In S1101, a UE transmits first information to a source next generation Node B (gNB), and the gNB returns second information.

The first information may be activation request information of adjustment function for timer(s). The first information may also be reporting information of UE adjustment capability for timer(s). The first information may be carried in an RRC message, a MAC CE, or UCI. For example, the first message is a newly defined RRC message, MAC CE or UCI, or may be a *UEAssistancelnformation* or *UE capability information* message. As shown in FIG. 11b, the second information may only include whether the UE is allowed to perform adjustment function for timer(s), or may include timer duration range(s).

As shown in FIG. 11a, if the source gNB does not allow adjustment function for timer(s), the second information returned by the gNB is negative acknowledgement (NACK) information. The UE terminates the adjustment for the timer(s) and directly uses timer duration(s) originally configured by the gNB.

As shown in FIG. 11b, if the source gNB allows adjustment function for timer(s), the second information returned by the gNB is acknowledgement (ACK) information. Optionally, the second information includes the timer duration range(s), and the UE performs a second operation.

The timer duration range(s) that the UE may obtain may include the following situations:
(1) only the timer duration configuration information contains the timer duration range(s);
(2) only the second information contains the timer duration range(s);
(3) The timer duration configuration information contains the timer duration range(s), and the second information contains the timer duration range(s).

Examples of reasons why the UE needs to transmit the first information are as follows:
(1) the gNB may not be configured with adjustment function for relevant timer(s) and cannot allow UE self-configuration.
(2) the gNB needs to serve multiple UEs, and contention may arise between different users. For example, if two UEs adjust the duration of the T304 timer simultaneously during handover, access contention may occur, causing connection failures of both UEs.

In S1102, the second operation may include that the UE inputs the second information and third information into a first model to determine fourth information. If the second information received by the UE from the gNB does not include a timer duration range, other methods may be used. For example, the UE obtains the timer duration range, as the second information input into the model, from the timer duration configuration information transmitted by a network side.

The input information of the first model is the second information and the third information, and the output information is the fourth information. The first model may be an artificial intelligence (AI) model, which includes a supervised learning model or a reinforcement learning model. For example, the AI model may be a long short-term memory model (LSTM) or a multi-armed bandit model. Different first models may be configured for different timers. The different first models may be a same AI model with different parameter configurations, or different AI models with different parameter configurations.

The third information may be information that the UE may collect through its own sensors, including but not limited to GPS location information, speed information, an information timestamp, etc. The third information is introduced because different third information may imply different future state information of the UE. For example, if the GPS information of the UE is known, the future movement trajectory of the UE may be predicted to assist in adjusting the T304 switching timer. With known speed information, it is possible to predict the duration of UE residence in a specific cell and adjust the T300 initial access timer in a timely manner. With the known information timestamp, the service traffic of the UE in the future may be predicted, and the duration of the bandwidth part inactivity timer (bwp-InactivityTimer) may be coordinated.

The fourth information is the timer configuration information calculated by the UE according to the first model. The fourth information must be a value within the given range of the timer. For example, if the given range of the T300 timer is the set {ms100, ms200, ms300, ms400, ms600, ms1000, ms1500, ms2000}, the fourth information may be ms200 (i.e., the timer is configured to 200 milliseconds), but cannot be ms500.

In S1103 (optional), the UE reports the fourth information to the source gNB. The source gNB synchronizes its timer duration configuration based on the fourth information.

If a difference between the fourth information calculated by the UE and the duration of the timer transmitted by the network side is less than a first threshold, the UE directly performs subsequent timer start operations according to the fourth information determined by itself, without reporting the fourth information to the gNB.

If a difference between the fourth information calculated by the UE and the duration of the timer transmitted by the network side is greater than or equal to the first threshold, the UE reports the fourth information to the gNB, and the gNB synchronizes its timer duration configuration based on the fourth information.

For example, if the first threshold is 10 ms, the UE calculates a duration of 50 ms for a specific timer. The network configuration value is 80 ms. A difference between 80 ms and 50 ms is 30 ms, and 30 ms is greater than 10 ms, thereby triggering a reporting procedure.

The setting of the first threshold varies with the service requirements related to the timer. For example, a first threshold of a timer, such as T302, involving security issues and strictly controlled by the system needs to be set to 0 ms, while a first threshold of a mobility-related timer, such as T304 timer, may be set to 30 ms.

Example 2: the UE does not obtain a timer duration range.

In a case where the network is unable or unwilling to inform the UE of a duration range of a relevant timer, the UE needs to adjust the corresponding timer value based on the duration of the timer configured by the network. In this case, the first operation will be different from Example 1.

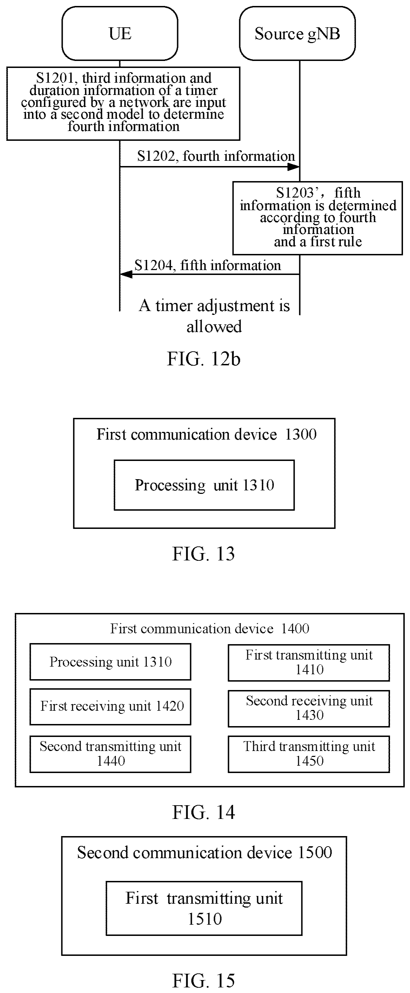

As shown in FIG. 12a and FIG. 12b, adjustment operations of a UE based on a duration of a timer configured by a network may include the following steps.

In S1201, the UE inputs the third information and the timer duration configuration information transmitted by the network side into a second model to determine the fourth information. If the fourth information is the same as timer configuration information transmitted by the network side, the timer does not need to be adjusted; if they are different, the procedure proceeds to S1202.

In S1202, the UE reports the fourth information to gNB, and the gNB determines whether to use the fourth information to configure the duration of the timer.

In S1203, as shown in FIG. 12a, if the fourth information is not used, the gNB feeds back NACK information to the UE, and the UE still uses the duration of the timer transmitted by the network side.

In S1203', as shown in FIG. 12b, if the fourth information is used, the gNB determines fifth information according to the first rule based on the timer range known to it, and transmits the fifth information to the UE in S1204.

Some components of the above process are described as follows.
(1) The input information of the second model is the third information and the timer duration information transmitted by the network side (gNB), and the output information is the fourth information. The second model is an artificial intelligence (AI) model, which includes a supervised learning model or a reinforcement learning model. For example, the AI model may be one of an LSTM model and a multi-armed bandit model. Different second models need to be configured for different timers. The different second models may be the same AI model with different parameter configurations, or different AI models with different parameter configurations. The second model in Example 2 and the first model in Example 1 may be the same model or different models.
(2) Determination of the fourth information: in this example, the UE may directly calculate the fourth information locally and report the fourth information without first transmitting the first information to the gNB to activate adjustment function for the timer. Since the network side does not transmit the timer range, the UE does not know the timer range and may only adjust the timer based on the duration of the timer transmitted by the network side as a reference value.

Adjustments to the timer may be based on fixed increments. For example, the duration of the T300 timer transmitted by the network side is ms400, and the timer may be adjusted by {200 ms decrease, 100 ms decrease, 100 ms increase, 200 ms increase}; that is, the timer may be configured with one of {ms200, ms300, ms500, ms600}.

The adjustments to the timer may also be based on scaling. For example, the T300 timer configuration information transmitted by the network side is ms400, and the adjustment for the timer may be {reduction to 1/4, reduction to 1/2, increase to 2 times, increase to 4 times}; that is, the timer may be configured with one of {ms100, ms200, ms800, ms1600}.

(3) First rule: since the value of the timer adjusted by the UE itself may not belong to the timer range pre-configured by the network side, for example, the value range of the T300 timer pre-configured by the network side is {ms100, ms200, ms300, ms400, ms600, ms1000, ms1500, ms2000}, the duration of the T300 timer (the fourth information), adjusted by the UE, is ms450. Therefore, the gNB needs to further process the fourth information reported by the UE. The first rule may be determined by the network side, as shown in the following examples.
a. The first rule may be to select a value closest to the fourth information from the timer range as the fifth information. For example, the second information of the T300 timer is the set {ms100, ms200, ms300, ms400, ms600, ms1000, ms1500, ms2000}; the fourth information received by the gNB is 450 milliseconds; and the gNB selects 400 milliseconds as a new timer duration.
b. The first rule may also be to select a value greater than or equal to and closest to the fourth information from the timer range as the fifth information. For example, the second information of the T300 timer is the set {ms100, ms200, ms300, ms400, ms600, ms1000, ms1500, ms2000}; the fourth information received by the gNB is 450 milliseconds; and the gNB selects 600 milliseconds as a new timer duration.
c. The first rule may also be to select a value less than and closest to the fourth information from the timer range as the fifth information. For example, the second information of the T300 timer is the set {ms100, ms200, ms300, ms400, ms600, ms1000, ms1500, ms2000}; the fourth information received by the gNB is 450 milliseconds; and the gNB selects 400 milliseconds as a new timer duration.
d. The first rule may also be to select a value from the timer range as the fifth information, based on other network configuration optimization technologies.

(4) The fifth information may be the timer duration reconfigured by the network for the UE, or may be whether the UE is allowed to adjust the first value of the timer based on the reported fourth information.

Example 3: Feedback mechanism for first model/second model optimization.
1. The first model/second model is not static, but may be dynamically optimized according to the results of each timer configuration. In this example, the feedback mechanism is introduced to continuously improve the accuracy of the model's calculation results.

The result of the timer configuration is a difference between the performance obtained by the UE using the AI-adjusted duration of the timer (specifically referenced as the fourth information in Example 1 and the fifth information in Example 2) and the performance obtained based on the duration of the timer originally configured by the network.

The performance difference may be illustrated through the following examples:
the performance of the AI-based solution is better than that of the original network configuration solution, and there is performance gain; and
the performance of the AI-based solution is equal to or weaker than that of the original network configuration solution, and there is no performance gain.

Taking the T300 timer as an example, T300 is an initial access-related timer. The performance differences may be shown in the following examples.
(1) If the network originally configures the duration of the timer to be ms400, and the duration of the timer is adjusted to ms200 based on AI, the UE fails to perform random access within 200 milliseconds, which indicates that the timer result determined by AI has no gain and the calculation is inaccurate.
(2) If the network originally configures the duration of the timer to be ms200, and the duration of the timer is adjusted to ms400 based on AI, the UE successfully performs random access within 300 milliseconds, which indicates that the timer result determined by AI brings gain and is calculated accurately.
(3) If the network originally configures the duration of the timer to be ms200, and the duration of the timer is adjusted to ms400 based on AI, the UE successfully performs random access within 100 milliseconds, which indicates that the timer result determined by AI has no gain and the calculation is inaccurate.

The UE uses both the AI-adjusted duration of the timer and whether the duration of the timer brings gain as a dataset for model optimization to optimize the first/second model.

2. The dataset for model optimization may come from the UE itself, the network side or other UEs.

At the same location or time, the same timers of different UEs using the same model (the first model or the second model) may have similarities. The optimization of the first/second model may be accelerated by sharing the feedback dataset.

Examples of sharing the first model/second model optimization dataset are as follows.
(1) The UE uploads its own dataset to the network (e.g., the source gNB). The network side aggregates datasets from different UEs and shares the datasets with other UEs using the same model. In this way, the network side may save a large number of datasets for a long time, and the UE may obtain these datasets in a short time, accelerating the update of model parameters. For example, the first model is a contextual bandit model; cell coverage conditions faced by UEs during handover within the same geographical area are similar. The network may store the T304 timer adjustment dataset of all UEs that have switched in the area, and a single UE may optimize its own first model through obtaining the dataset stored on the network side.
(2) A UE shares its dataset directly with another UE over sidelink. In this way, the interaction between UEs in the same geographical area may also enable them to obtain a large amount of datasets. In this scenario, frequent dataset interactions between UEs and the network side may be avoided, thereby reducing the amount of network interaction signaling. For example, UE 1 may share its model optimization dataset with UE 2, and UE 2 may share the model optimization datasets of UE 1 and UE 2 with UE 3.

Example 4: Variable duration timer.

In Example 1 and Example 2, the duration of the timer actually used falls within the timer duration range configured by the network. In future networks, determining the duration of the timer may still not be flexible enough. This example provides a method for determining a variable duration timer whose expiration may be triggered by an event without setting a value in advance.
1. The timer setting is usually associated with a specific operation. For example, the T304 timer is related to whether to perform random access, and the T302 timer is related to whether to initiate a new RRC connection. Therefore, the UE may directly determine whether to perform a timer-related operation without setting a timer value. In this case, the fourth information may indicate whether to perform a timer-related operation.
   (1) If the fourth information is an indication indicating to perform a timer-related operation, the UE maintains the related operation until the next operation indication arrives.
   (2) If the fourth information is an indication indicating not to perform the timer-related operation, the UE suspends the related operation until the next operation indication arrives.
   2. After determining the fourth information, the UE may directly perform the content of the fourth information, or the network side may, after UE-network synchronization, further determine whether to perform the content of the fourth information.

The above event triggering process is equivalent to implementing a variable duration timer.

For the T304 timer, for example, when the UE receives a handover command at time t1, the behavior of the UE may include the following:
(1) At time t1, the UE determines that the obtained fourth information indicates to perform a timer-related operation (i.e., random access), and the UE continues to perform the random access operation. At time t2, the UE determines that the obtained fourth information indicates to cease random access, stops the random access operation for a current target cell, and triggers cell re-establishment. This process is equivalent to setting the T304 timer duration to (t2-t1).
(2) At time t1, the UE determines that the obtained fourth information indicates not to perform the timer-related operation (i.e., random access), stops the random access operation for the current target cell, and triggers cell re-establishment. This process is equivalent to setting the T304 timer duration to zero.

For the T302 timer, for example, if the UE receives an RRC Reject (RRCReject) message at time t1, the behavior of the UE may include the following:
(1) At time t1, the UE determines that the obtained fourth information indicates not to perform a timer-related operation (i.e., not to initiate a new RRC connection), and remains in the waiting state. At time t2, the UE determines that the obtained fourth information indicates not to initiate a new RRC connection, and continues in the waiting state. At time t3, the UE determines that the obtained fourth information indicates to initiate a new RRC connection, stops waiting and initiates a new RRC connection request. This process is equivalent to setting the T302 timer duration to (t3-t1).
(2) At time t1, the UE determines that the obtained fourth information indicates to perform the timer-related operation (i.e., to initiate a new RRC connection), does not wait any longer, and directly initiates a new RRC connection request. This process is equivalent to setting the T302 timer duration to zero.

In the above process, the UE may determine the fourth information periodically or based on event triggers. For example, the network side may trigger determination of the T302's fourth information. In a case where the load on the network side changes, the UE is notified to re-determine the fourth information.

The timer control method according to the embodiments of the present application is a method for adjusting timer(s) in a radio access network, and its specific features are as follows.

The adjustment for the timer(s) is strongly related to the third information of the UE, such as location information, an information timestamp (such as the time period of a day), and may be changed according to the change of the UE location, the timestamp, etc.

The adjustment rule of the timer(s) may be dynamically changed; that is, the first model/second model used for timer adjustment may be continuously updated based on feedback results after the timer adjustment.

The adjustment for the timer(s) may be controlled to a certain extent by the network (or jointly determined by the terminal and the network), rather than being adjusted completely autonomously by the UE. For example, the adjustment for the timer(s) needs to be based on the network's original configuration value(s) (Example 2), the timer range(s) issued by the network (Example 1), and the network's continuous triggering (Example 4).

The timer control method according to the embodiments of the present application may be an AI-based timer adjustment method, which mainly includes timer adjustment schemes for two cases: the network may provide timer range(s) and the network cannot provide timer range(s). The main consideration is to assist the UE in adaptively adjusting timer duration(s) based on its own location information, timestamp information, etc., using the historical timer adjustment values of the UE and the obtained performance gains, so as to change the rigid configuration of the traditional network timer duration(s), so that the timer duration(s) may adapt to the rapid wireless environment changes, thereby enhancing timer-related operations and improving network performance.

The first model/second model in the embodiments of the present application may not be an AI model; for example, it may also be a statistical analysis model that may count the number of times performance gains are obtained and output the fourth information based on historical statistical results.

The nodes on the network side in the above examples may not be limited to gNB nodes, but may also be other wireless network access nodes, such as eNodeB nodes, next generation evolutional Node B (ng-eNodeB) nodes. While the examples describe the first communication device as a UE and the second communication device as a gNB for illustrative purposes, the communication system to which the embodiments of the present application is specifically applicable may not be limited to the communication system in the form of UE/gNB. For example, the first communication device is a terminal or an Internet of Things device, and the second communication device is a network access device.

FIG. 13 is a schematic block diagram of a first communication device 1300 according to an embodiment of the present application. The first communication device 1300 may include:
a processing unit 1310 configured to determine control information of timer(s) based on duration-related information of the timer(s) and state information of the first communication device.

FIG. 14 is a schematic block diagram of a first communication device 1400 according to another embodiment of the present application. The first communication device 1400 may include the processing unit 1310 in the above embodiment of the second communication device. In an implementation, the first communication device further includes:
a first transmitting unit 1410 configured to transmit first information, where the first information is used for requesting to activate adjustment function for timer(s) and/or reporting adjustment capability for timer(s).

In an implementation, the first information is included in at least one of: an RRC message, a MAC CE, UCI, a UE assistance information message or a UE capability information message.

In an implementation, as shown in FIG. 14, the first communication device 1400 further includes:
a first receiving unit 1420 configured to receive second information, where the second information is used for indicating timer duration range(s) and/or whether the first communication device is allowed to perform the adjustment function for the timer(s).

In an implementation, the processing unit 1310 is further configured to collect the state information of the first communication device through sensors of the first communication device.

In an implementation, the processing unit 1310 is further configured to, in a case where the second information indicates that the first communication device is allowed to perform adjustment function for the timer(s), determine the control information of the timer(s) based on the duration-related information of the timer(s) and the state information of the first communication device.

In an implementation, the processing unit 1310 is further configured to, in a case where the second information indicates that the first communication device is not allowed to perform adjustment function for a timer, use a first duration of the timer configured by a second communication device as a working duration of the timer. For example, the processing unit 1310 terminates the adjustment function for the timer and uses the first duration of the timer configured by the second communication device as the working duration of the timer.

In an implementation, the first duration is a default duration of the timer configured by the second communication device.

In an implementation, the state information of the first communication device includes at least one of GPS location information, speed information or an information timestamp of the first communication device.

In an implementation, the duration-related information of the timer(s) includes timer duration range(s).

In an implementation, the timer duration range(s) are carried in timer duration configuration information and/or the second information.

In an implementation, the duration-related information of the timer(s) includes first duration(s) of the timer(s) configured by the second communication device.

In an implementation, control information of a timer includes a second duration of the timer.

In an implementation, the second duration is a working duration of the timer determined by the first communication device based on the duration-related information of the timer and the state information of the first communication device.

In an implementation, the duration-related information of the timer includes the first duration of the timer configured by the second communication device, and the second duration is obtained by performing a fixed increment or proportional scaling adjustment based on the state information of the first communication device and the first duration of the timer configured by the second communication device.

In an implementation, the duration-related information of the timer(s) includes timer duration range(s), where the second duration is within a timer duration range.

In an implementation, the processing unit 1310 is further configured to control the timer based on the second duration.

In an implementation, a condition for controlling the timer based on the second duration includes one of:
a difference between the second duration and the first duration being less than a first threshold; or
the second duration being equal to the first duration.

In an implementation, the processing unit 1310 is further configured to transmit the control information of the timer to the second communication device.

In an implementation, a condition for transmitting the control information of the timer to the second communication device includes one of:
a difference between the second duration and the first duration being greater than or equal to a first threshold; or
the second duration being different from the first duration.

In an implementation, the processing unit 1310 is further configured to at least one of:
in a case where a difference between the second duration and the first duration is less than a first threshold, not transmit the control information of the timer, and performs a start operation for the timer according to the control information of the timer;
in a case where the difference between the second duration and the first duration is greater than or equal to the first threshold, control the first transmitting unit 1410 to transmit the control information of the timer to the second communication device to synchronize the duration configuration of the timer to the second communication device; or
in a case where the second duration is different from the first duration, control the first transmitting unit 1410 to transmit the control information of the timer to the second communication device to synchronize the duration configuration of the timer to the second communication device.

In an implementation, the first threshold is set based on a service requirement related to the timer.

In an implementation, as shown in FIG. 14, the first communication device 1400 further includes:
a second receiving unit 1430 configured to receive adjustment information of the timer, where the adjustment information of the timer is determined by the second communication device based on the control information of the timer and the timer duration range.

In an implementation, the adjustment information of the timer is used for indicating whether the first communication device is allowed to adjust the working duration of the timer based on the control information of the timer.

In an implementation, the adjustment information of the timer is used for indicating a third duration of the timer, and the third duration is a duration of the timer reconfigured by the second communication device for the first communication device.

In an implementation, in a case where the second duration of the timer does not fall within the timer duration range, the third duration is determined based on the second duration and the timer duration range.

In an implementation, the first rule includes one of:
selecting a value closest to the second duration from the timer duration range;
selecting a value greater than and closest to the second duration of the timer from the timer duration range; or
selecting a value less than and closest to the second duration of the timer from the timer duration range.

In an implementation, the processing unit is further configured to, in a case of receiving information used for indicating that the control information of the timer is not used to control the timer, use the first duration of the timer configured by the second communication device as the working duration of the timer.

In an implementation, a step of determining the control information of the timer(s) by the first communication device is periodic or based on an event trigger.

In an implementation, the control information of the timer is used for indicating whether to perform an operation related to the timer.

In an implementation, in a case where the control information of the timer indicates to perform the operation related to the timer, the first communication device continuously performs the operation related to the timer.

In an implementation, in a case where the control information of the timer indicates not to perform the operation related to the timer, the first communication device does not perform the operation related to the timer continuously.

In an implementation, the operation related to the timer is starting the timer or stopping the timer.

In an implementation, the control information of the timer is obtained using model(s), input features of the model(s) including the duration-related information of the timer and the state information of the first communication device, and output features of the model(s) including the control information of the timer.

In an implementation, the model(s) include at least one of: a supervised learning model, a reinforcement learning model, or a statistical model.

In an implementation, the processing unit is further configured to dynamically optimize the model(s).

In an implementation, optimization methods of the model(s) include:
determining a performance difference between a timer adjustment performance corresponding to the duration of the timer obtained based on the model(s) and a timer adjustment performance corresponding to the first duration of the timer configured by the second communication device; and
optimizing the model(s) based on the performance difference;
wherein the duration of the timer obtained based on the model(s) includes the second duration of the timer determined by the first communication device, and/or the third duration of the timer obtained based on the second duration received by the first communication device from the second communication device.

In an implementation, the performance difference of the timer adjustment result includes at least one of:
if the performance of using the duration of the timer obtained based on the model(s) is better than the performance of using the first duration of the timer, there is a performance gain;
if the performance of using the duration of the timer obtained based on the model(s) is equal to or weaker than the performance of using the first duration of the timer, there is no performance gain.

In an implementation, a dataset used for optimizing the model(s) includes at least one of:
the control information of the timer and performance difference before and after timer adjustment using the control information of the timer;
the adjustment information of the timer and performance difference before and after timer adjustment using the adjustment information of the timer; or
parameters of the model(s).

In an implementation, source(s) of the dataset used for optimizing the model(s) includes the first communication device and/or the second communication device.

In an implementation, the first communication device is a terminal device, and the second communication device is a network device. As shown in FIG. 14, the first communication device 1400 further includes:
a second transmitting unit 1440 configured to upload a dataset of the first communication device to the network device.

In an implementation, the first communication device is a first terminal device, and the second communication device is a second terminal device. As shown in FIG. 14, the first communication device 1400 further includes:
a third transmitting unit 1450 configured to transmit a dataset of the first terminal device to the second terminal device over a sidelink.

The first communication devices 1300 and 1400 according to the embodiments of the present application may implement the corresponding functions of the first communication device in the above method embodiments. The procedures, functions, implementations and beneficial effects corresponding to each module (sub-module, unit or component, etc.) in the first communication device 1300, 1400 may be found in the corresponding description in the above method embodiments, which will not be repeated here. It should be noted that the functions described in the various modules (sub-modules, units or components, etc.) in the first communication devices 1300 and 1400 in the embodiments of the present application may be implemented by different modules (sub-modules, units or components, etc.) or by the same module (sub-module, unit or component, etc.).

FIG. 15 is a schematic block diagram of a second communication device 1500 according to an embodiment of the present application. The second communication device 1500 may include:
a first transmitting unit 1510 configured to transmit duration-related information of timer(s), where the duration-related information of the timer(s) is used for indicating to a first communication device to determine control information of the timer(s) based on the duration-related information of the timer(s) and state information of the first communication device.

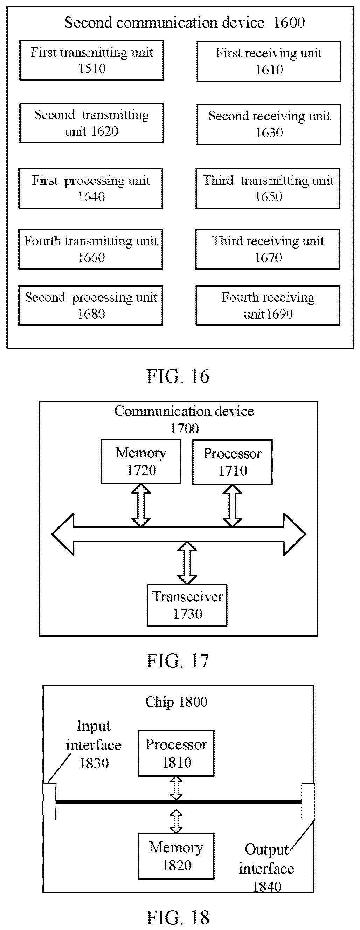

FIG. 16 is a schematic block diagram of a second communication device 1600 according to another embodiment of the present application. The second communication device 1600 may include the first transmitting unit 1510 in the above embodiment of the second communication device. In an implementation, the second communication device further includes:
a first receiving unit 1610 configured to receive first information, where the first information is used for requesting to activate adjustment function for timer(s) and/or reporting adjustment capability for timer(s).

In an implementation, the first information is included in at least one of: an RRC message, a MAC CE, UCI, a UE assistance information message or a UE capability information message.

In an implementation, as shown in FIG. 16, the second communication device 1600 further includes:
a second transmitting unit 1620 configured to transmit second information, where the second information is used for indicating timer duration range(s) and/or whether the first communication device is allowed to perform the adjustment function for the timer(s).

In an implementation, the state information of the first communication device includes at least one of GPS location information, speed information or an information timestamp of the first communication device.

In an implementation, the duration-related information of the timer(s) includes timer duration range(s).

In an implementation, the timer duration range(s) are carried in timer duration configuration information and/or the second information.

In an implementation, the duration-related information of the timer(s) includes the first duration(s) of the timer(s) configured by the second communication device.

In an implementation, the first duration is a default duration of the timer configured by the second communication device.

In an implementation, the control information of the timer(s) includes second duration(s) of the timer(s).

In an implementation, the second duration is a working duration of the timer determined by the first communication device based on the duration-related information of the timer and the state information of the first communication device.

In an implementation, the duration-related information of the timer includes the first duration of the timer configured by the second communication device, and the second duration is obtained by performing a fixed increment or proportional scaling adjustment based on the state information of the first communication device and the first duration of the timer configured by the second communication device.

In an implementation, the duration-related information of the timer includes a timer duration range, and the second duration is within the timer duration range.

In an implementation, as shown in FIG. 16, the second communication device 1600 further includes:
a second receiving unit 1630 configured to receive control information of a timer. For example, the second receiving unit 1630 is configured to receive control information of a timer from the first communication device. After receiving the control information of the timer, the second communication device may use the control information of the timer to synchronize the duration configuration of the timer.

In an implementation, as shown in FIG. 16, the second communication device 1600 further includes:
a first processing unit 1640 configured to determine adjustment information of the timer based on the control information of the timer and a timer duration range; and
a third transmitting unit 1650 configured to transmit the adjustment information of the timer,

In an implementation, the adjustment information of the timer is used for indicating whether the first communication device is allowed to adjust the working duration of the timer based on the control information of the timer.

In an implementation, the adjustment information of the timer is used for indicating a third duration of the timer, and the third duration is determined based on the second duration and the timer duration range.

In an implementation, as shown in FIG. 16, the first processing unit 1640 is configured to, in a case where the second duration of the timer does not fall within the timer duration range, process the second duration of the timer based on a first rule to obtain the third duration.

In an implementation, the first rule includes one of:
selecting a value closest to the second duration from the timer duration range;
selecting a value greater than and closest to the second duration of the timer from the timer duration range; or
selecting a value less than and closest to the second duration of the timer from the timer duration range.

In an implementation, as shown in FIG. 16, the second communication device 1600 further includes:
a fourth transmitting unit 1660 configured to transmit information used for indicating that the control information of the timer is not used to control the timer, for example, NACK information for the control information of the timer.

In an implementation, the control information of the timer is used for indicating whether to perform an operation related to the timer.

In an implementation, the operation related to the timer is starting the timer or stopping the timer.

In an implementation, the control information of the timer is obtained by the first communication device using model(s); input features of the model(s) include the duration-related information of the timer and the state information of the first communication device, and output features of the model(s) include the control information of the timer.

In an implementation, the model(s) are at least one of: a supervised learning model, a reinforcement learning model, or a statistical model.

In an implementation, a dataset used for optimizing the model(s) includes at least one of:
the control information of the timer and performance difference before and after timer adjustment using the control information of the timer; the adjustment information of the timer and performance difference before and after timer adjustment using the adjustment information of the timer; or
parameters of the model(s).

In an implementation, sources of the dataset used for optimizing the model include the first communication device and/or the second communication device.

In an implementation, the first communication device is a terminal device, and the second communication device is a network device. As shown in FIG. 16, the second communication device further includes:
a third receiving unit 1670 configured to receive at least one dataset uploaded by the terminal device; and
a second processing unit 1680 configured to aggregate and share the received datasets.

In an implementation, the first communication device is a first terminal device, and the second communication device is a second terminal device. As shown in FIG. 16, the second communication device 1600 further includes:
a fourth receiving unit 1690 configured to receive a dataset of the first terminal device transmitted by the first terminal device over a sidelink.

The second communication devices 1500 and 1600 in the embodiments of the present application may implement the corresponding functions of the second communication device in the above method embodiments. The procedures, functions, implementations and beneficial effects corresponding to each module (sub-module, unit or component, etc.) in the second communication device 1500, 1600 may be found in the corresponding description in the above method embodiments, which will not be repeated here. It should be noted that the functions described in the various modules (sub-modules, units or components, etc.) in the second communication devices 1500 and 1600 in the embodiments of the present application may be implemented by different modules (sub-modules, units or components, etc.) or by the same module (sub-module, unit or component, etc.).

FIG. 17 is a schematic structural diagram of a communication device 1700 according to embodiments of the present application. The communication device 1700 includes a processor 1710, and the processor 1710 may call a computer program from a memory, and run the computer program to cause the communication device 1700 to implement the methods in the embodiments of the present application.

In an implementation, the communication device 1700 may further include a memory 1720. The processor 1710 may call a computer program from the memory 1720, and run the computer program to cause the communication device 1700 to implement the method in the embodiments of the present application.

The memory 1720 may be a separate device independent from the processor 1710, or may be integrated into the processor 1710.

In an implementation, the communication device 1700 may further include a transceiver 1730, and the processor 1710 may control the transceiver 1730 to communicate with other devices, and specifically, to transmit information or data to other devices, or receive information or data transmitted by other devices.

The transceiver 1730 may include a transmitter and a receiver. The transceiver 1730 may further include antenna(s), and there may be one or more t antennas.

In an implementation, the communication device 1700 may be the first communication device in the embodiments of the present application, and the communication device 1700 may implement the corresponding procedure implemented by the first communication device in the various methods of the embodiments of the present application, which will not be repeated here for brevity.

In an implementation, the communication device 1700 may be the second communication device in the embodiments of the present application, and the communication device 1700 may implement the corresponding procedure implemented by the second communication device in the various methods of the embodiments of the present application, which will not be repeated here for brevity.

FIG. 18 is a schematic structural diagram of a chip 1800 according to embodiments of the present application. The chip 1800 includes a processor 1810, and the processor 2010 may call a computer program from a memory and run the computer program to implement the methods in the embodiments of the present application.

In an implementation, the chip 1800 may further include a memory 1820. The processor 1810 may call a computer program from the memory 1820 and run the computer program to implement the methods performed by a first communication device or a second communication device in the embodiments of the present application.

The memory 1820 may be a separate device independent from the processor 1810, or may be integrated into the processor 1810.

In an implementation, the chip 1800 may further include an input interface 1830. The processor 1810 may control the input interface 1830 to communicate with other devices or chips, and specifically, the input interface 1830 may obtain information or data transmitted by other devices or chips.

In an implementation, the chip 1800 may further include an output interface 1840. The processor 1810 may control the output interface 1840 to communicate with other devices or chips, and specifically, the output interface 1840 may output information or data to other devices or chips.

In an implementation, the chip may be applied to the first communication device in the embodiments of the present application, and the chip may implement the corresponding procedure implemented by the first communication device in the various methods of the embodiment of the present application, which will not be repeated here for brevity.

In an implementation, the chip may be applied to the second communication device in the embodiments of the present application, and the chip may implement the corresponding procedure implemented by the second communication device in the various methods of the embodiment of the present application, which will not be repeated here for brevity.

The chip applied to the first communication device and the second communication device may be the same chip or different chips.

It should be understood that the chip mentioned in the embodiments of the present application may also be called a system-level on chip, a system chip, a chip system or a system-on-chip chip, etc.

The above processor may be a general-purpose processor, a digital signal processor (DSP), a field programmable gate array (FPGA), an application specific integrated circuit (ASIC) or another programmable logic device, a transistor logic device, a discrete hardware component, etc. The general-purpose processor may be a microprocessor, or any conventional processor, etc.

The memory may be a volatile (transitory) memory or a non-volatile (non-transitory) memory, or may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM).

It should be understood that the above memory is exemplary but not limiting illustration. For example, the memory in embodiments of the present application may further be a static random access memory (static RAM, SRAM), a dynamic random access memory (dynamic RAM, DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). That is, the memory in the embodiments of the present application is intended to include, but not limited to, these and any other suitable types of memories.

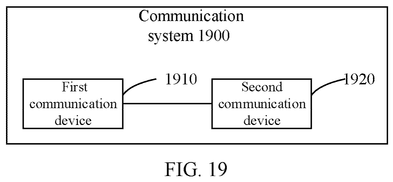

FIG. 19 is a schematic block diagram of a communication system 1900 according to embodiments of the present application. The communication system 1900 includes a first communication device 1910 and a second communication device 1920.

The first communication device 1910 is configured to determine control information of timer(s) based on duration-related information of the timer(s) and state information of the first communication device; and the second communication device 1920 is configured to transmit duration-related information of the timer(s).

The first communication device 1910 may be used to implement the corresponding functions implemented by the first communication device in the above method, and the second communication device 1920 may be used to implement the corresponding functions implemented by the second communication device in the above method, which will not be repeated here for brevity.

The above embodiments may be implemented in whole or in part through software, hardware, firmware, or any combination thereof. When implemented by using a software program, the embodiments may be implemented in a form of a computer program product in whole or in part. The computer program product includes one or more computer instructions. When the computer program instructions are loaded on and executed by a computer, processes or functions described in the embodiments of the present application are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, radio or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It can be understood that, in the various embodiments of the present application, the magnitude of the serial numbers of the above-mentioned processes does not mean the order of execution. The execution order of each process should be determined by its function and internal logic, and should not constitute any limitation on the implementation process of the embodiments of the present application.

It may be clearly understood by those skilled in the art that, for convenience and brevity of the description, the specific working procedures of the system, the apparatus and the unit described above may refer to the corresponding procedures in the above method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. A timer control method, comprising:
determining, by a first communication device, control information of timer(s) based on duration-related information of the timer(s) and state information of the first communication device.

2. The method according to claim 1, wherein the method further comprises:
transmitting, by the first communication device, first information, wherein the first information is used for requesting to activate adjustment function for timer(s) and/or reporting adjustment capability for timer(s).

3. The method according to claim 2, wherein the first information is comprised in at least one of: a radio resource control (RRC) message, a media access control (MAC) control element (CE), uplink control information (UCI), a user equipment (UE) assistance information message or a UE capability information message.

4. The method according to any one of claims 1 to 3, wherein the method further comprises:
receiving, by the first communication device, second information, wherein the second information is used for indicating timer duration range(s) and/or whether the first communication device is allowed to perform the adjustment function for the timer(s).

5. The method according to claim 4, wherein determining, by the first communication device, the control information of the timer(s) based on the duration-related information of the timer(s) and the state information of the first communication device comprises:
in a case where the second information indicates that the first communication device is allowed to perform adjustment function for the timer(s), determining, by the first communication device, the control information of the timer(s) based on the duration-related information of the timer(s) and the state information of the first communication device.

6. The method according to claim 4 or 5, wherein the method further comprises:
in a case where the second information indicates that the first communication device is not allowed to perform adjustment function for a timer, using a first duration of the timer configured by a second communication device as a working duration of the timer.

7. The method according to claim 6, wherein the first duration is a default duration of the timer configured by the second communication device.

8. The method according to any one of claims 1 to 7, wherein the state information of the first communication device comprises at least one of global positioning system (GPS) location information, speed information or an information timestamp of the first communication device.

9. The method according to any one of claims 1 to 8, wherein the method further comprises:
collecting, by the first communication device, the state information of the first communication device through its own sensors.

10. The method according to any one of claims 1 to 9, wherein the duration-related information of the timer(s) comprises timer duration range(s).

11. The method according to claim 10, wherein the timer duration range(s) are carried in timer duration configuration information and/or second information.

12. The method according to any one of claims 1 to 9, wherein the duration-related information of the timer(s) comprises first duration(s) of the timer(s) configured by a second communication device.

13. The method according to any one of claims 1 to 13, wherein the control information of the timer(s) comprises second duration(s) of the timer(s).

14. The method according to claim 13, wherein a second duration is a working duration of a timer determined by the first communication device based on duration-related information of the timer and the state information of the first communication device.

15. The method according to claim 13 or 14, wherein duration-related information of a timer comprises a first duration of the timer configured by a second communication device, and a second duration is obtained by performing a fixed increment or proportional scaling adjustment based on the state information of the first communication device and the first duration of the timer configured by the second communication device.

16. The method according to claim 13 or 14, wherein the duration-related information of the timer(s) comprises timer duration range(s), wherein a second duration is within a timer duration range.

17. The method according to any one of claims 13 to 16, wherein the method further comprises:
controlling, by the first communication device, a timer based on a second duration.

18. The method according to claim 17, wherein a condition for the first communication device to control the timer based on the second duration comprises one of:
a difference between the second duration and a first duration being less than a first threshold; or
the second duration being equal to the first duration.

19. The method according to any one of claims 13 to 16, wherein the method further comprises:
transmitting, by the first communication device, control information of a timer to a second communication device.

20. The method according to claim 19, wherein a condition for the first communication device to transmit the control information of the timer to the second communication device comprises one of:
a difference between the second duration and a first duration being greater than or equal to a first threshold; or
the second duration being different from the first duration.

21. The method according to claim 18 or 20, wherein the first threshold is set based on a service requirement related to the timer.

22. The method according to any one of claims 19 to 21, wherein the method further comprises:
receiving, by the first communication device, adjustment information of the timer, wherein the adjustment information of the timer is determined by the second communication device based on the control information of the timer and a timer duration range, wherein the adjustment information of the timer is used for indicating whether the first communication device is allowed to adjust a working duration of the timer based on the control information of the timer.

23. The method according to claim 22, wherein the adjustment information of the timer is used for indicating a third duration of the timer, the third duration being determined based on a second duration and the timer duration range.

24. The method according to claim 22 or 23, wherein in a case where a second duration of the timer does not fall within the timer duration range, the third duration is obtained by the second communication device processing the second duration of the timer based on a first rule.

25. The method according to claim 24, wherein the first rule comprises one of:
selecting a value closest to the second duration from the timer duration range;
selecting a value greater than and closest to the second duration of the timer from the timer duration range; or
selecting a value less than and closest to the second duration of the timer from the timer duration range.

26. The method according to any one of claims 19 to 25, wherein the method further comprises:
in a case where the first communication device receives information used for indicating that the control information of the timer is not used to control the timer, using, by the first communication device, a first duration of the timer configured by the second communication device as a working duration of the timer.

27. The method according to any one of claims 1 to 26, wherein a step of determining the control information of the timer(s) by the first communication device is periodic or based on an event trigger.

28. The method according to any one of claims 1 to 27, wherein control information of a timer is used for indicating whether to perform an operation related to the timer.

29. The method according to claim 28, wherein in a case where the control information of the timer indicates to perform the operation related to the timer, the first communication device continuously performs the operation related to the timer.

30. The method according to claim 28 or 29, wherein in a case where the control information of the timer indicates not to perform the operation related to the timer, the first communication device does not perform the operation related to the timer continuously.

31. The method according to any one of claims 28 to 30, wherein the operation related to the timer is starting the timer or stopping the timer.

32. The method according to any one of claims 1 to 31, wherein control information of a timer is obtained using model(s), input features of the model(s) comprising duration-related information of the timer and the state information of the first communication device, and output features of the model(s) comprising the control information of the timer.

33. The method according to claim 32, wherein the model(s) comprises at least one of: a supervised learning model, a reinforcement learning model, or a statistical model.

34. The method according to claim 32 or 33, wherein the method further comprises:
dynamically optimizing, by the first communication device, the model(s).

35. The method according to any one of claims 32 to 34, wherein optimization methods of the model(s) comprise:
determining, by the first communication device, a performance difference between a timer adjustment performance corresponding to a duration of the timer obtained based on the model(s) and a timer adjustment performance corresponding to a first duration of the timer configured by a second communication device; and
optimizing, by the first communication device, the model(s) based on the performance difference;
wherein the duration of the timer obtained based on the model(s) comprises a second duration of the timer determined by the first communication device, and/or a third duration of the timer obtained based on the second duration received by the first communication device from the second communication device.

36. The method according to any one of claims 32 to 35, wherein a dataset used for optimizing the model(s) comprises at least one of:
the control information of the timer and a performance difference before and after timer adjustment using the control information of the timer;
adjustment information of the timer and a performance difference before and after timer adjustment using the adjustment information of the timer; or
parameters of the model(s).

37. The method according to claim 36, wherein the first communication device is a terminal device, a second communication device is a network device, and the method further comprises:
uploading, by the first communication device, its own dataset to the network device.

38. The method according to claim 36, wherein the first communication device is a first terminal device, a second communication device is a second terminal device, and the method further comprises:
transmitting, by the first terminal device, a dataset of the first terminal device to the second terminal device over a sidelink.

39. A timer control method, comprising:
transmitting, by a second communication device, duration-related information of timer(s), wherein the duration-related information of the timer(s) is used for indicating to a first communication device to determine control information of the timer(s) based on the duration-related information of the timer(s) and state information of the first communication device.

40. The method according to claim 39, wherein the method further comprises:
receiving, by the second communication device, first information, wherein the first information is used for requesting to activate adjustment function for timer(s) and/or reporting adjustment capability for timer(s).

41. The method according to claim 40, wherein the first information is comprised in at least one of: an RRC message, a MAC CE, UCI, a UE assistance information message or a UE capability information message.

42. The method according to any one of claims 39 to 41, wherein the method further comprises:
transmitting, by the second communication device, second information, wherein the second information is used for indicating timer duration range(s) and/or whether the first communication device is allowed to perform the adjustment function for the timer(s).

43. The method according to any one of claims 39 to 42, wherein the state information of the first communication device comprises at least one of GPS location information, speed information or an information timestamp of the first communication device.

44. The method according to any one of claims 39 to 43, wherein the duration-related information of the timer(s) comprises timer duration range(s).

45. The method according to claim 44, wherein the timer duration range(s) are carried in timer duration configuration information and/or second information.

46. The method according to any one of claims 39 to 45, wherein the duration-related information of the timer(s) comprises first duration(s) of the timer(s) configured by the second communication device.

47. The method of claim 46, wherein a first duration is a default duration of a timer configured by the second communication device.

48. The method according to any one of claims 39 to 47, wherein the control information of the timer(s) comprises second duration(s) of the timer(s).

49. The method according to claim 48, wherein a second duration is a working duration of a timer determined by the first communication device based on duration-related information of the timer and the state information of the first communication device.

50. The method according to claim 48 or 49, wherein duration-related information of a timer comprises a first duration of the timer configured by the second communication device, and a second duration is obtained by performing a fixed increment or proportional scaling adjustment based on the state information of the first communication device and the first duration of the timer configured by the second communication device.

51. The method according to claim 48 or 49, wherein the duration-related information of the timer(s) comprises timer duration range(s), wherein a second duration is within a timer duration range.

52. The method according to any one of claims 48 to 51, wherein the method further comprises:
receiving, by the second communication device, control information of a timer from the first communication device.

53. The method according to any one of claims 48 to 52, wherein the method further comprises:
determining, by the second communication device, adjustment information of the timer based on the control information of the timer and a timer duration range; and
transmitting, by the second communication device, the adjustment information of the timer, wherein the adjustment information of the timer is used for indicating whether the first communication device is allowed to adjust a working duration of the timer based on the control information of the timer.

54. The method according to claim 53, wherein the adjustment information of the timer is used for indicating a third duration of the timer, the third duration being determined based on a second duration and the timer duration range.

55. The method according to claim 53 or 54, wherein determining, by the second communication device, the adjustment information of the timer based on the control information of the timer and the timer duration range comprises:
in a case where a second duration of the timer does not fall within the timer duration range, processing, by the second communication device, the second duration of the timer based on a first rule to obtain a third duration of the timer.

56. The method according to claim 55, wherein the first rule comprises one of:
selecting a value closest to the second duration from the timer duration range;
selecting a value greater than and closest to the second duration of the timer from the timer duration range; or
selecting a value less than and closest to the second duration of the timer from the timer duration range.

57. The method according to any one of claims 52 to 56, wherein the method further comprises:
transmitting, by the second communication device, information used for indicating that the control information of the timer is not used to control the timer.

58. The method according to any one of claims 39 to 57, wherein the control information of the timer is used for indicating whether to perform an operation related to the timer.

59. The method according to claim 58, wherein the operation related to the timer is starting the timer or stopping the timer.

60. The method according to any one of claims 39 to 59, wherein control information of a timer is obtained by the first communication device using model(s), input features of the model(s) comprising duration-related information of the timer and the state information of the first communication device, and output features of the model(s) comprising the control information of the timer.

61. The method according to claim 60, wherein the model(s) are at least one of: a supervised learning model, a reinforcement learning model, or a statistical model.

62. The method according to claim 60 or 61, wherein a dataset used for optimizing the model(s) comprises at least one of:
the control information of the timer and a performance difference before and after timer adjustment using the control information of the timer;
adjustment information of the timer and a performance difference before and after timer adjustment using the adjustment information of the timer; or
parameters of the model(s).

63. The method according to claim 62, wherein the first communication device is a terminal device, the second communication device is a network device, and the method further comprises:
receiving, by the network device, at least one dataset uploaded by the terminal device; and
aggregating and sharing, by the network device, the received datasets.

64. The method according to claim 62, wherein the first communication device is a first terminal device, the second communication device is a second terminal device, and the method further comprises:
receiving, by the second terminal device, a dataset of the first terminal device transmitted by the first terminal device over a sidelink.

65. A first communication device, comprising:
a processing unit configured to determine control information of timer(s) based on duration-related information of the timer(s) and state information of the first communication device.

66. The first communication device according to claim 65, wherein the first communication device further comprises:
a first transmitting unit configured to transmit first information, wherein the first information is used for requesting to activate adjustment function for timer(s) and/or reporting adjustment capability for timer(s).

67. The first communication device according to claim 66, wherein the first information is comprised in at least one of: an RRC message, a MAC CE, UCI, a UE assistance information message or a UE capability information message.

68. The first communication device according to any one of claims 65 to 67, wherein the first communication device further comprises:
a first receiving unit configured to receive second information, wherein the second information is used for indicating timer duration range(s) and/or whether the first communication device is allowed to perform the adjustment function for the timer(s).

69. The first communication device according to claim 68, wherein the processing unit is further configured to, in a case where the second information indicates that the first communication device is allowed to perform adjustment function of the timer(s), determine the control information of the timer(s) based on the duration-related information of the timer(s) and the state information of the first communication device.

70. The first communication device according to claim 68 or 69, wherein the processing unit is further configured to, in a case where the second information indicates that the first communication device is not allowed to perform adjustment function for a timer, use a first duration of the timer configured by a second communication device as a working duration of the timer.

71. The first communication device according to claim 70, wherein the first duration is a default duration of the timer configured by the second communication device.

72. The first communication device according to any one of claims 65 to 71, wherein the state information of the first communication device comprises at least one of GPS location information, speed information or an information timestamp of the first communication device.

73. The first communication device according to any one of claims 65 to 72, wherein the processing unit is further configured to collect the state information of the first communication device through sensors of the first communication device.

74. The first communication device according to any one of claims 65 to 73, wherein the duration-related information of the timer(s) comprises timer duration range(s).

75. The first communication device according to claim 74, wherein the timer duration range(s) are carried in timer duration configuration information and/or second information.

76. The first communication device according to any one of claims 65 to 73, wherein the duration-related information of the timer(s) comprises the first duration(s) of the timer(s) configured by a second communication device.

77. The first communication device according to any one of claims 65 to 76, wherein the control information of the timer(s) comprises second duration(s) of the timer(s).

78. The first communication device according to claim 77, wherein a second duration is a working duration of a timer determined by the first communication device based on duration-related information of the timer and the state information of the first communication device.

79. The first communication device according to claim 77 or 78, wherein duration-related information of a timer comprises a first duration of the timer configured by a second communication device, and a second duration is obtained by performing a fixed increment or proportional scaling adjustment based on the state information of the first communication device and the first duration of the timer configured by the second communication device.

80. The first communication device according to claim 77 or 78, wherein the duration-related information of the timer(s) comprises timer duration range(s), wherein a second duration is within a timer duration range.

81. The first communication device according to any one of claims 77 to 80, wherein the processing unit is further configured to control a timer based on a second duration.

82. The first communication device according to claim 81, wherein a condition for controlling the timer based on the second duration comprises one of:
a difference between the second duration and a first duration being less than a first threshold; or
the second duration being equal to the first duration.

83. The first communication device according to any one of claims 77 to 80, wherein the processing unit is further configured to transmit control information of a timer to a second communication device.

84. The first communication device according to any one of claims 77 to 80, wherein a condition for transmitting control information of a timer to a second communication device comprises one of:
a difference between a second duration and a first duration being greater than or equal to a first threshold; or
the second duration being different from the first duration.

85. The first communication device according to claim 82 or 84, wherein the first threshold is set based on a service requirement related to the timer.

86. The first communication device according to any one of claims 83 to 85, wherein the first communication device further comprises:
a second receiving unit configured to receive adjustment information of the timer, wherein the adjustment information of the timer is determined by the second communication device based on the control information of the timer and a timer duration range, wherein the adjustment information of the timer is used for indicating whether the first communication device is allowed to adjust a working duration of the timer based on the control information of the timer.

87. The first communication device according to claim 86, wherein the adjustment information of the timer is used for indicating a third duration of the timer, the third duration being a duration of the timer reconfigured by the second communication device for the first communication device.

88. The first communication device according to claim 86 or 87, wherein in a case where a second duration of the timer does not fall within the timer duration range, a third duration is determined based on the second duration and the timer duration range.

89. The first communication device according to claim 88, wherein the first rule comprises at least one of:
selecting a value closest to the second duration from the timer duration range;
selecting a value greater than and closest to the second duration of the timer from the timer duration range; or
selecting a value less than and closest to the second duration of the timer from the timer duration range.

90. The first communication device according to any one of claims 83 to 89, wherein the processing unit is further configured to, in a case of receiving information used for indicating that the control information of the timer is not used to control the timer, use a first duration of the timer configured by the second communication device as a working duration of the timer.

91. The first communication device according to any one of claims 65 to 90, wherein a step of determining the control information of the timer(s) by the first communication device is periodic or based on an event trigger.

92. The first communication device according to any one of claims 65 to 91, wherein control information of a timer is used for indicating whether to perform an operation related to the timer.

93. The first communication device according to claim 92, wherein in a case where the control information of the timer indicates to perform the operation related to the timer, the first communication device continuously performs the operation related to the timer.

94. The first communication device according to claim 92 or 93, wherein in a case where the control information of the timer indicates not to perform the operation related to the timer, the first communication device does not perform the operation related to the timer continuously.

95. The first communication device according to any one of claims 92 to 94, wherein the operation related to the timer is starting the timer or stopping the timer.

96. The first communication device according to any one of claims 65 to 95, wherein control information of a timer is obtained using model(s), input features of the model(s) comprising duration-related information of the timer and the state information of the first communication device, and output features of the model(s) comprising the control information of the timer.

97. The first communication device according to claim 96, wherein the model(s) comprise at least one of: a supervised learning model, a reinforcement learning model, or a statistical model.

98. The first communication device according to claim 96 or 97, wherein the processing unit is further configured to dynamically optimize the model(s).

99. The first communication device according to any one of claims 96 to 98, wherein optimization methods of the model(s) comprise:
determining a performance difference between a timer adjustment performance corresponding to a duration of the timer obtained based on the model(s) and a timer adjustment performance corresponding to a first duration of the timer configured by the second communication device; and
optimizing the model(s) based on the performance difference;
wherein the duration of the timer obtained based on the model(s) comprises a second duration of the timer determined by the first communication device, and/or a third duration of the timer obtained based on a second duration received by the first communication device from the second communication device.

100. The first communication device according to any one of claims 96 to 99, wherein a dataset used for optimizing the model(s) comprises at least one of:
the control information of the timer and a performance difference before and after timer adjustment using the control information of the timer;
adjustment information of the timer and a performance difference before and after timer adjustment using the adjustment information of the timer; or
parameters of the model(s).

101. The first communication device according to claim 100, wherein the first communication device is a terminal device, a second communication device is a network device, and the first communication device further comprises:
a second transmitting unit configured to upload a dataset of the first communication device to the network device.

102. The first communication device according to claim 100, wherein the first communication device is a first terminal device, a second communication device is a second terminal device, and the first communication device further comprises:
a third transmitting unit configured to transmit a dataset of the first terminal device to the second terminal device over a sidelink.

103. A second communication device, comprising:
a first transmitting unit configured to transmit duration-related information of timer(s), wherein the duration-related information of the timer(s) is used for indicating to a first communication device to determine control information of the timer(s) based on the duration-related information of the timer(s) and state information of the first communication device.

104. The second communication device according to claim 103, wherein the second communication device further comprises:
a first receiving unit configured to receive first information, wherein the first information is used for requesting to activate adjustment function for timer(s) and/or reporting adjustment capability for timer(s).

105. The second communication device according to claim 104, wherein the first information is comprised in at least one of: an RRC message, a MAC CE, UCI, a UE assistance information message or a UE capability information message.

106. The second communication device according to any one of claims 103 to 105, wherein the second communication device further comprises:
a second transmitting unit configured to transmit second information, wherein the second information is used for indicating timer duration range(s) and/or whether the first communication device is allowed to perform adjustment function for timer(s).

107. The second communication device according to any one of claims 103 to 106, wherein the state information of the first communication device comprises at least one of GPS location information, speed information or an information timestamp of the first communication device.

108. The second communication device according to any one of claims 103 to 107, wherein the duration-related information of the timer(s) comprises timer duration range(s).

109. The second communication device according to claim 108, wherein the timer duration range(s) are carried in timer duration configuration information and/or second information.

110. The second communication device according to any one of claims 103 to 109, wherein the duration-related information of the timer(s) comprises first duration(s) of the timer(s) configured by the second communication device.

111. The second communication device according to claim 110, wherein a first duration is a default duration of a timer configured by the second communication device.

112. The second communication device according to any one of claims 103 to 111, wherein the control information of the timer(s) comprises second duration(s) of the timer(s).

113. The second communication device according to claim 112, wherein a second duration is a working duration of a timer determined by the first communication device based on duration-related information of the timer and the state information of the first communication device.

114. The second communication device according to claim 112 or 113, wherein duration-related information of a timer comprises a first duration of the timer configured by the second communication device, and a second duration is obtained by performing a fixed increment or proportional scaling adjustment based on the state information of the first communication device and the first duration of the timer configured by the second communication device.

115. The second communication device according to claim 112 or 113, wherein the duration-related information of the timer(s) comprises timer duration range(s), wherein a second duration is within a timer duration range.

116. The second communication device according to any one of claims 112 to 115, wherein the second communication device further comprises:
a second receiving unit configured to receive control information of a timer from the first communication device.

117. The second communication device according to any one of claims 112 to 116, wherein the second communication device further comprises:
a first processing unit configured to determine adjustment information of the timer based on the control information of the timer and a timer duration range; and
a third transmitting unit configured to transmit the adjustment information of the timer, wherein the adjustment information of the timer is used for indicating whether the first communication device is allowed to adjust a working duration of the timer based on the control information of the timer.

118. The second communication device according to claim 117, wherein the adjustment information of the timer is used for indicating a third duration of the timer, the third duration being determined based on a second duration and the timer duration range.

119. The second communication device according to claim 117 or 118, wherein the first processing unit is further configured to, in a case where a second duration of the timer does not fall within the timer duration range, process the second duration of the timer based on a first rule to obtain a third duration.

120. The second communication device according to claim 119, wherein the first rule comprises one of:
selecting a value closest to the second duration from the timer duration range;
selecting a value greater than and closest to the second duration of the timer from the timer duration range; or
selecting a value less than and closest to the second duration of the timer from the timer duration range.

121. The second communication device according to any one of claims 112 to 120, wherein the second communication device further comprises:
a fourth transmitting unit configured to transmit information used for indicating that control information of a timer is not used to control the timer.

122. The second communication device according to any one of claims 103 to 121, wherein control information of a timer is used for indicating whether to perform an operation related to the timer.

123. The second communication device according to claim 122, wherein the operation related to the timer is starting the timer or stopping the timer.

124. The second communication device according to any one of claims 103 to 123, wherein control information of a timer is obtained by the first communication device using model(s), input features of the model(s) comprising duration-related information of the timer and the state information of the first communication device, and output features of the model(s) comprising the control information of the timer.

125. The second communication device according to claim 124, wherein the model(s) are at least one of: a supervised learning model, a reinforcement learning model, or a statistical model.

126. The second communication device according to claim 124 or 125, wherein a dataset used for optimizing the model(s) comprises at least one of:
the control information of the timer and a performance difference before and after timer adjustment using the control information of the timer;
adjustment information of the timer and a performance difference before and after timer adjustment using the adjustment information of the timer; or
parameters of the model(s).

127. The second communication device according to claim 126, wherein the first communication device is a terminal device, the second communication device is a network device, and the second communication device further comprises:
a third receiving unit configured to receive at least one dataset uploaded by the terminal device; and
a second processing unit configured to aggregate and share the received datasets.

128. The second communication device according to claim 126, wherein the first communication device is a first terminal device, the second communication device is a second terminal device, and the second communication device further comprises:
a fourth receiving unit configured to receive a dataset of the first terminal device transmitted by the first terminal device over a sidelink.

129. A communication device comprising a processor and a memory, wherein the memory is configured to store a computer program, and the processor is configured to call the computer program stored in the memory and run the computer program to cause the communication device to perform the method according to any one of claims 1 to 38 or any one of claims 39 to 64.

130. A chip comprising a processor configured to call a computer program from a memory and run the computer program to cause a device equipped with the chip to perform the method according to any one of claims 1 to 38 or any one of claims 39 to 64.

132. A computer program product comprising computer program instructions, wherein the computer program instructions cause a computer to perform the method according to any one of claims 1 to 38 or any one of claims 39 to 64.

133. A computer program, wherein the computer program causes a computer to perform the method according to any one of claims 1 to 38 or any one of claims 39 to 64.
